# EUROPEAN PATENT APPLICATION

(11) **EP 4 697 666 A1**
(43) Date of publication of application: **18.02.2026**
(21) Application number: 24758435.2
(22) Date of filing: 20.06.2024
(51) Int. Cl.: H04L 41/0803, H04L 41/16, H04L 41/14, H04L 41/0895, H04L 41/22

(54) **NETWORK PLANNING CONSTRUCTION METHOD, APPARATUS, DEVICE AND MEDIUM**

(71) Applicant: New H3C Technologies Co., Ltd., Hangzhou, Zhejiang 310052 (CN)
(72) Inventor: YAN, Feng, Beijing 100102 (CN)
(74) Representative: IPAZ
(86) International application number: PCT/CN2024/100406
(87) International publication number: WO 2025/260327

(57) **Abstract**

The examples of the present disclosure provide a method and apparatus for network planning and construction, a device and a medium, which relates to the field of artificial intelligence technology. The method comprises: collecting a first natural language indicating an intention of the network planning and construction based on a human-computer interaction mode; inputting the first natural language into an AI network large model to obtain a target network construction scheme, which includes network topology information and network configuration information; and configuring, after detecting that a network device corresponding to the network topology information is powered on, the network device according to the network configuration information. The disclosure of the technical solution provided in the examples of the present disclosure can increase the understanding ability of user business level intentions, improve the scalability of intention collection, and enhance the adaptation ability to scenarios and networking.

## Description

### Technical Field

The present disclosure relates to the field of artificial intelligence technology, particularly to a method and apparatus for network planning and construction, a device and a medium.

### Background

The planning and construction is a stage in a management service of the entire lifecycle of Data Center Network (DCN). The implementation process of the network planning and construction is actually a configuration process of a network device. At present, the process of network planning and construction is to determine a target network construction scheme based on a network language indicating an intention input by a user and a pre-configured network construction scheme, and configure the network device according to the target network construction scheme.

The input intention of this method for network planning and construction is a highly specialized network language, which is difficult for the user to understand and requires a professional network administrator to understand, resulting in poor user friendliness. Furthermore, only fixed intentions can be collected and understood. When there are new and changing intentions, the device will not be able to understand the new and changing intentions and cannot configure the network device. In addition, the device can only configure the network device based on a fixed intention and a pre-configured network construction scheme, and the pre-configured network construction scheme is limited and cannot adapt to a new scenario or a network requirement by itself.

### Summary

The examples of the present disclosure provide a method and apparatus for network planning and construction, a device and a medium, which can increase the ability of understanding user's business level intention, improve the scalability of intention collection, and enhance the adaptation ability to scenarios and networking. Specifically, the technical solutions are as follows.

In one aspect, examples of the present disclosure provide a method for network planning and construction including:
collecting a first natural language indicating an intention of the network planning and construction based on a human-computer interaction mode;
inputting the first natural language into an artificial intelligence AI network large model to obtain a target network construction scheme, wherein the target network construction scheme comprises network topology information and network configuration information;
configuring, after detecting that a network device corresponding to the network topology information is powered on, the network device according to the network configuration information.

In some examples, collecting the first natural language indicating the intention of the network planning and construction based on the human-computer interaction mode includes:
presenting a human-computer interaction dialog box;
receiving the first natural language indicating the intention of the network planning and construction input by a user in the human-computer interaction dialog box.

In some examples, the method further includes:
displaying first prompt information in the human-computer interaction dialog box, wherein the first prompt information is to guide the input of the intention of the network planning and construction.

In some examples, inputting the first natural language into an artificial intelligence AI network large model to obtain a target network construction scheme includes:
matching the first natural language with pieces of knowledge of multiple pre-stored network construction schemes, to obtain multiple pieces of candidate knowledge;
inputting the first natural language and the multiple pieces of candidate knowledge into the AI network large model to obtain the target network construction scheme.

In some examples, the method further includes:
collecting a second natural language indicating a presentation mode of the network planning and construction based on the human-computer interaction mode;
inputting the second natural language into the AI network large model to obtain a target presentation mode;
calling an interface corresponding to the target presentation mode by using an AI agent, to present the target network construction scheme.

In some examples, collecting the second natural language indicating the presentation mode of the network planning and construction based on the human-computer interaction mode includes:
presenting a human-computer interaction dialog box;
receiving the second natural language indicating the presentation mode of the network planning and construction input by a user in the human-computer interaction dialog box.

In some examples, the method further includes:
displaying second prompt information in the human-computer interaction dialog box, wherein the second prompt information is to guide the input of the presentation mode of the network planning and construction.

In some examples, the method further includes:
adjusting the presented target network construction scheme based on an operation of the user.
In some examples, the AI network large model outputs multiple target network construction schemes;
the method further includes:
   determining one target network construction scheme from the multiple target network construction schemes;
   wherein configuring, after detecting that the network device corresponding to the network topology information is powered on, the network device according to the network configuration information comprises:
      configuring, after detecting that a network device corresponding to the network topology information comprised in the determined target network construction scheme is powered on, the network device according to the network configuration information comprised in the determined target network construction scheme.

In some examples, determining one target network construction scheme from the multiple target network construction schemes comprises:
collecting a third natural language indicating the determined target network construction scheme based on the human-computer interaction mode;
inputting the third natural language into the AI network large model to obtain the determined target network construction scheme.

In some examples, collecting the third natural language indicating the determined target network construction scheme based on the human-computer interaction mode includes:
presenting a human-computer interaction dialog box;
receiving the third natural language indicating the determined target network construction scheme input by a user in the human-computer interaction dialog box.

In some examples, the method further includes:
displaying third prompt information in the human-computer interaction dialog box, wherein the third prompt information is to guide the input of the determined target network construction scheme.

In some examples, configuring a network device according to the network configuration information includes:
collecting a fourth natural language indicating configuration of the network device based on the human-computer interaction mode;
inputting the fourth natural language into the AI network large model to obtain a network device configuration instruction;
calling an interface corresponding to the network device configuration instruction by using an AI agent, to configure the network device according to the network configuration information.

In some examples, collecting the fourth natural language indicating the configuration of the network device based on the human-computer interaction mode includes:
presenting a human-computer interaction dialog box;
receiving the fourth natural language indicating the configuration of the network device input by a user in the human-computer interaction dialog box.

In some examples, the method further includes:
displaying fourth prompt information in the human-computer interaction dialog box, wherein the fourth prompt information is to guide the input of execution information for the configuration of the network device.

In some examples, the method further includes:
determining a to-be-executed operation;
displaying prompt information associated with the to-be-executed operation, in the human-computer interaction dialog box.

In some examples, the method further includes:
obtaining a sample natural language and a sample network planning and construction scheme corresponding to the sample natural language;
fine-tuning the AI network large model by using the sample natural language and the sample network planning and construction scheme.

In second aspect, the examples of the present disclosure provide an apparatus for network planning and construction including:
a collecting module to collect a first natural language indicating an intention of the network planning and construction based on a human-computer interaction mode;
a first determining module to input the first natural language into an artificial intelligence AI network large model to obtain a target network construction scheme, wherein the target network construction scheme comprises network topology information and network configuration information;
a configuring module to configure, after detecting that a network device corresponding to the network topology information is powered on, the network device according to the network configuration information.

In some examples, the collecting module is specifically to:
present a human-computer interaction dialog box;
receive the first natural language indicating the intention of the network planning and construction input by a user in the human-computer interaction dialog box.

In some examples, the collecting module is further to:
display first prompt information in the human-computer interaction dialog box, which is to guide the input of the intention of the network planning and construction.

In some examples, the first determining module is specifically to:
match the first natural language with pieces of knowledge of multiple pre-stored network construction schemes, to obtain multiple pieces of candidate knowledge;
input the first natural language and the multiple pieces of candidate knowledge into the AI network large model to obtain the target network construction scheme.

In some examples, the apparatus further includes a displaying module to:
collect a second natural language indicating a presentation mode of the network planning and construction based on the human-computer interaction mode;
input the second natural language into the AI network large model to obtain a target presentation mode;
call an interface corresponding to the target presentation mode by using an AI agent, to present the target network construction scheme.

In some examples, the displaying module is specifically to:
present a human-computer interaction dialog box;
receive the second natural language indicating the presentation mode of the network planning and construction input by a user in the human-computer interaction dialog box.

In some examples, the displaying module is further to:
display second prompt information in the human-computer interaction dialog box, wherein the second prompt information is to guide the input of the presentation mode of the network planning and construction.

In some examples, the apparatus further includes an adjusting module to:
adjust the presented target network construction scheme based on an operation of the user.

In some examples, the AI network large model outputs multiple target network construction schemes;
The apparatus further includes a second determining module to:
determine one target network construction scheme from the multiple target network construction schemes;
the configuring module is specifically to:
   configure, after detecting that a network device corresponding to the network topology information comprised in the determined target network construction scheme is powered on, the network device according to the network configuration information comprised in the determined target network construction scheme.

In some examples, the second determining module is specifically to:
collect a third natural language indicating the determined target network construction scheme based on the human-computer interaction mode;
input the third natural language into the AI network large model to obtain the determined target network construction scheme.

In some examples, the second determining module is specifically to:
present a human-computer interaction dialog box;
receive the third natural language indicating the determined target network construction scheme input by a user in the human-computer interaction dialog box.

In some examples, the second determining module is further to:
display third prompt information in the human-computer interaction dialog box, wherein the third prompt information is to guide the input of the determined target network construction scheme.

In some examples, the configuring module is specifically to:
collect a fourth natural language indicating configuration of the network device based on the human-computer interaction mode;
input the fourth natural language into the AI network large model to obtain a network device configuration instruction;
call an interface corresponding to the network device configuration instruction by using an AI agent, to configure the network device according to the network configuration information.

In some examples, the configuring module is specifically to:
present a human-computer interaction dialog box;
receive the fourth natural language indicating the configuration of the network device input by a user in the human-computer interaction dialog box.

In some examples, the configuring module is further to:
display fourth prompt information in the human-computer interaction dialog box, wherein the fourth prompt information is to guide the input of execution information for the configuration of the network device.

In some examples, the apparatus further includes a displaying module to:
determine a to-be-executed operation;
display prompt information associated with the to-be-executed operation, in the human-computer interaction dialog box.

In some examples, the apparatus further includes a fine-tuning module to:
obtain a sample natural language and a sample network planning and construction scheme corresponding to the sample natural language;
fine-tune the AI network large model by using the sample natural language and the sample network planning and construction scheme.

In a third aspect, the examples of the present disclosure provide an electronic device including a processor, a communication interface, a memory and a communication bus, wherein the processor, the communication interface, and the memory communicate with each other via the communication bus;
the memory is to store a computer program;
the processor is to implement any one of the methods in the first aspect described above when executing the program stored on the memory.

In a fourth aspect, the examples of the present disclosure provide a computer readable storage medium wherein the computer readable storage medium stores instructions thereon which, when executed by a processor, cause the processor to implement any one of the methods of the first aspect.

In still another example according to the present disclosure, there is also provided a computer program product with instructions that, when running on a computer, cause the computer to execute any one of the methods of the first aspect described above.

### Beneficial effects of the examples of the present disclosure:

In the technical solution provided in the examples of the present disclosure, the natural language is to express the intention of the user, namely the intention of network planning and construction. The natural language is a language that is easy for the user to understand and does not require a professional knowledge background. Therefore, using the natural language to express the intention of the user achieves the network planning and construction, and increases the ability of understanding user's business level intention. In addition, in the technical solution provided in the examples of the present disclosure, the AI network large model is to analyze and process the natural language (i.e. the first natural language) that expresses the intention of the user, to obtain the target network construction scheme that meets the intention of the network planning and construction. Due to the strong natural language processing ability of the AI network large model, even there are new and changing intentions, the AI network large model can analyze and obtain the desired target network construction scheme, improve the scalability of intention collection, and enhance the adaptation ability to scenarios and networking.

### Brief Description of the Drawings

The drawings described herein are intended to provide further understanding of the present disclosure, and form a part of the present disclosure. The schematic examples and description herein are to explain the present disclosure and do not constitute improper limitations to the present disclosure.
Fig. 1 is a schematic diagram of a hierarchical intergenerational definition of an autonomous network in a data center;
Fig. 2 is a schematic diagram of five general task stages of information and communication network operation and management activities;
Fig. 3 is a schematic diagram of an interface for intention collection stage;
Fig. 4 is a schematic diagram of an interface for scheme generation stage;
Fig. 5 is a schematic diagram of an interface for scheme simulation stage;
Fig. 6 is a flow chart of a method for network planning and construction provided in an example of the present disclosure;
Fig. 7 is a detailed schematic diagram of block S62 provided in an example of the present disclosure;
Fig. 8 is a schematic flow chart for establishing a scheme knowledge base provided in an example of the present disclosure;
Fig. 9 is a schematic flow chart for obtaining a target network construction scheme based on an AI network large model provided in an example of the present disclosure;
Fig. 10 is a schematic diagram of a processing logic in an intention analysis stage provided in an example of the present disclosure;
Fig. 11 is a schematic flow chart for displaying a network construction scheme provided in an example of the present disclosure;
Fig. 12 is a schematic diagram of using an AI agent framework for graphical presentation provided in an example of the present disclosure;
Fig. 13 is a first schematic flow chart for configuring a network device provided in an example of the present disclosure;
Fig. 14 is a detailed schematic diagram of block S131 provided in an example of the present disclosure;
Fig. 15 is a second schematic flow chart for configuring a network device provided in an example of the present disclosure;
Fig. 16 is a schematic diagram of a framework of the method for network planning and construction provided in an example of the present disclosure;
Figs. 17a to 17c are first schematic diagrams of the SDN controller interface provided in an example of the present disclosure;
Figs. 18a to 18b are second schematic diagrams of the SDN controller interface provided in an example of the present disclosure;
Figs. 19a to 19e are third schematic diagrams of the SDN controller interface provided in an example of the present disclosure;
Figs. 20a to 20b are fourth schematic diagrams of the SDN controller interface provided in an example of the present disclosure;
Fig. 21 is a schematic structural diagram of an apparatus for network planning and construction provided in an example of the present disclosure;
FIG. 22 is a schematic structural diagram of an electronic device provided in an example of the present disclosure.

### Detailed Description

In order to make objectives, technical solutions and advantages of the present disclosure more apparent, the present disclosure now will be described in detail with reference to the accompanying drawings and by way of examples. Obviously, the examples described are only some of the examples of the present disclosure instead of all of them. All other examples obtained by those of ordinary skills in the art based on the examples herein are within the scope of the present disclosure.

For ease of understanding, terms appearing in examples of the present disclosure are explained in the following.

**Autonomous network:** aims to build an automated and intelligent operation and maintenance ability for the entire lifecycle of the network, provide new network and Information and Communication Technology (ICT) services with "zero waiting, zero failure and zero contact" for consumers and vertical industry customers, and create a digital operation and maintenance ability with "self-configuring, self-repairing, and self-optimizing" for intelligent network operation and maintenance.

**AI network large model:** is a machine learning model with ultra large scale parameters (usually over one billion) and super powerful computing resources, which can process massive amounts of data and complete various complex tasks, such as natural language processing, image recognition and like. The AI network large model can also be referred to as Artificial Intelligence Generated Content (AIGC) network large model.

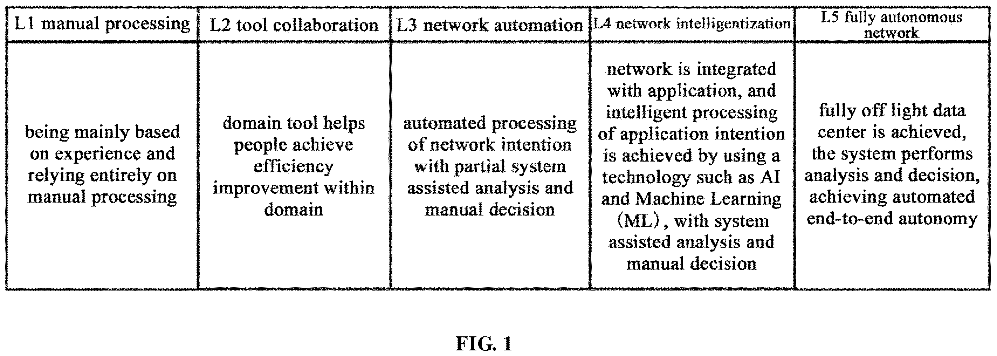

At present, DCN is gradually developing towards an autonomous network, forming an autonomous network in a data center. The network described in the following is an autonomous network in a data center. The object of the autonomous network in the data center is to gradually reduce the manual operation of the network until it is eliminated, guide the customer through defining hierarchical abilities, and gradually evolve towards the vision of unmanned DCN autonomy. Fig. 1 shows a schematic diagram of a hierarchical intergenerational definition of an autonomous network in a data center.

Level 1 (L1) manual processing: an autonomous network in a data center is mainly based on experience and relies entirely on the manual processing.

Level 2 (L2) tool collaboration: an autonomous network in a data center uses a domain tool to help people achieve an efficiency improvement within a domain.

Level 3 (L3) network automation: an autonomous network in a data center achieves automated processing of a network intention with partial system assisted analysis and manual decision.

Level 4 (L4) network intelligentization: an autonomous network in a data center is integrated with applications, and intelligent processing of application intentions is achieved by using a technology such as AI and Machine Learning (ML), with system assisted analysis and manual decision.

Level 5 (L5) fully autonomous network: an autonomous network in a data center achieves a fully off light data center, and the system performs analysis and decision, achieving automated end-to-end autonomy.

The achievement of the object of the autonomous network in the data center cannot be separated from the development of network automation and intelligent technology. The classification of the autonomous network in the data center can be divided into two dimensions.

Dimension 1: DCN full lifecycle management services, including planning and construction, network operation, monitoring and maintenance, and optimizing operation.

Dimension 2: information and communication network operation and management activities, including intention management, perception, analysis, decision, and execution.

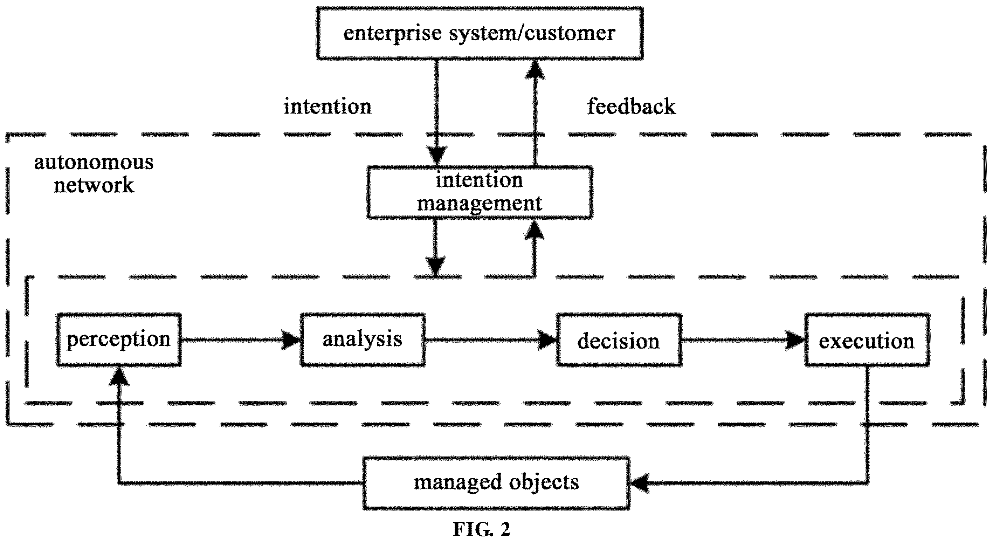

The autonomous network in the data center needs to perform information and communication network operation and management activities at every management service stage throughout its entire lifecycle. Fig. 2 shows five general task stages of information and communication network operation and management activities, namely intention management, perception, analysis, decision, and execution in the dimension 2 mentioned above.

**Intention management stage:** understanding the intentions of customer business and management operations, and translating them into specific network configurations and strategies. Intention management can support both low-level traditional functions, such as coordinating any required orchestration of configuration operations on the network, and higher-level abstract information understanding capabilities, such as open modifiable capabilities, to facilitate customers to make adjustments based on actual networking schemes. Intention management also includes full recording, traceability, and querying of the business intention operation process.

**Perception stage:** real time monitoring and observation of DCN, when discovering anomalies in network services or multidimensional issues such as Service Level Agreements (SLAs), triggering network analysis and localization. Specifically, it includes collecting raw network data and performing necessary preprocessing on the data (such as data cleaning, enhancement, statistics, etc.) to monitor and perceive network information (including network performance, network anomalies, network events, etc.), and achieve the purpose of visual presentation.

**Analysis stage:** analyzing the current state of DCN, and conducting network analysis based on historical data in combination with customer intentions to generate options and suggestions for operational actions and execution strategies that can meet customer intentions.

**Decision stage:** considering the options and suggestions provided in the analysis stage, determining the most suitable, executable network operations and strategies that meet the customer's intended needs.

**Execution stage:** generating executable network operations and policies based on the intentions of customers who have made decisions, automatically deploying them to the production network (i.e. DCN) in the data center, and also including business verification of intentions after network implementation.

In Fig. 2, an enterprise system/customer inputs an intention, and the autonomous network performs intention management on the input intention, understands the intention, perceives, analyzes, makes decisions, and executes it, operates on the managed objects, and provides feedback to the enterprise system/customer. The managed objects of DCN are various applications, DCN devices, and network endpoint devices.

At present, the planning and construction stage of the DCN full lifecycle management service (i.e. Dimension 1) involves: through an interface entrance solidified by the Software Defined Network (SDN) controller, determining a target network construction scheme based on a network language indicating an intention input by a user and a pre-configured network construction scheme, and configuring a network device according to the target network construction scheme. The process of network planning and construction consists of four stages: intention collection, scheme generation, scheme simulation, and scheme implementation, as follows.

### 1) Intention collection stage

The electronic device (i.e. the device for network planning and construction) collect a network language (i.e. user requirements for network construction) indicating an intention input by a user, wherein the network language is a language that expresses network architecture based on business resource orchestration, such as the number of spine nodes, leaf nodes, and border leaf nodes, as well as networking form. At this stage, the user can input intention content based on the prompt information displayed on the electronic device and the options provided by the device in the display box.

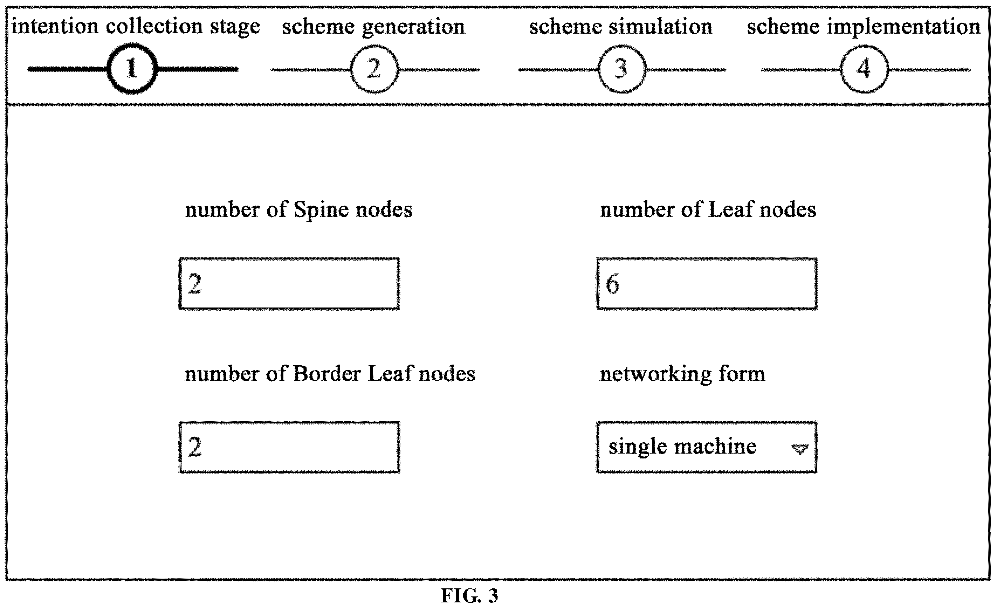

As shown in Fig. 3, the electronic device displays prompt information for the number of Spine nodes, Leaf nodes, and Border Leaf nodes, as well as the networking form. Based on the prompt information, the user inputs the corresponding number in the boxes below the number of Spine nodes, Leaf nodes, and Border Leaf nodes, and clicks on the right arrow button in the box below the networking form to select a networking form, that is, whether the networking form is a single machine or Multichassis Link Aggregation Group (M-LAG).

After completing the construction of the network architecture and inputting the intention content (i.e. the network language) through the above methods, the next block of generating the scheme can be performed.

### 2) Scheme generation stage

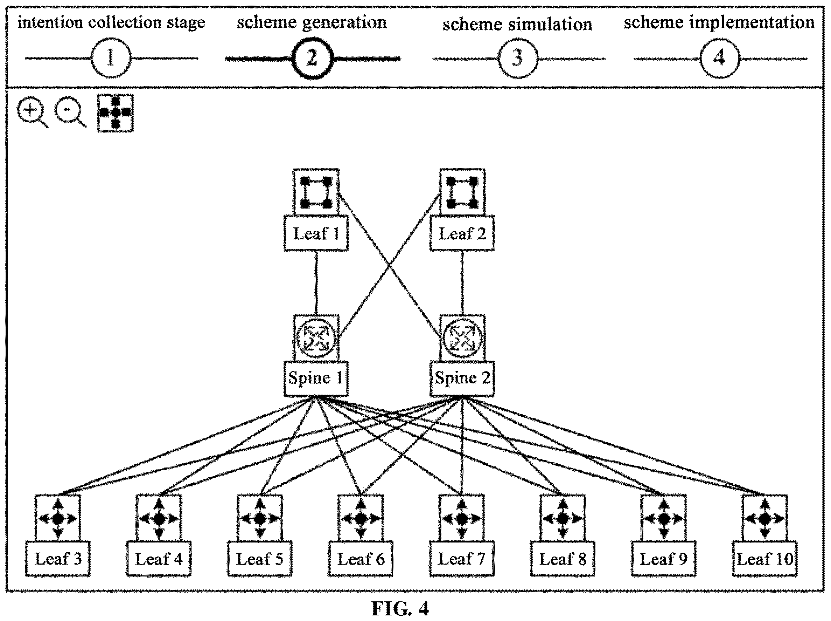

The Electronic device automatically converts the intention of network construction input by the user (i.e. intention content) into the pre-configured network construction scheme and present it to the user, that is, automatically generates network topology (such as interconnected devices, link information, etc.) and network device role; automatically distributes device management IP, Virtual Extensible Local Area Network Tunnel Endpoints (VTEP) IP and other information from Internet Protocol (IP) address pool; automatically generates network device interconnection routing configurations, etc., and finally obtains the network configuration of the network device (i.e. network construction scheme). As shown in the schematic diagram of the scheme generation stage in Fig. 4, the topology structure of the network construction scheme recommended by the electronic device to the user includes leaf nodes 1 to 10 and spine nodes 1 to 2.

### 3) Scheme simulation stage

Before sending the network configuration to the production network for network device configuration, the electronic device can simulate the connectivity and configuration consistency of the network in advance based on the simulation network, and simulate whether there are routing loops, routing black holes, and other issues.

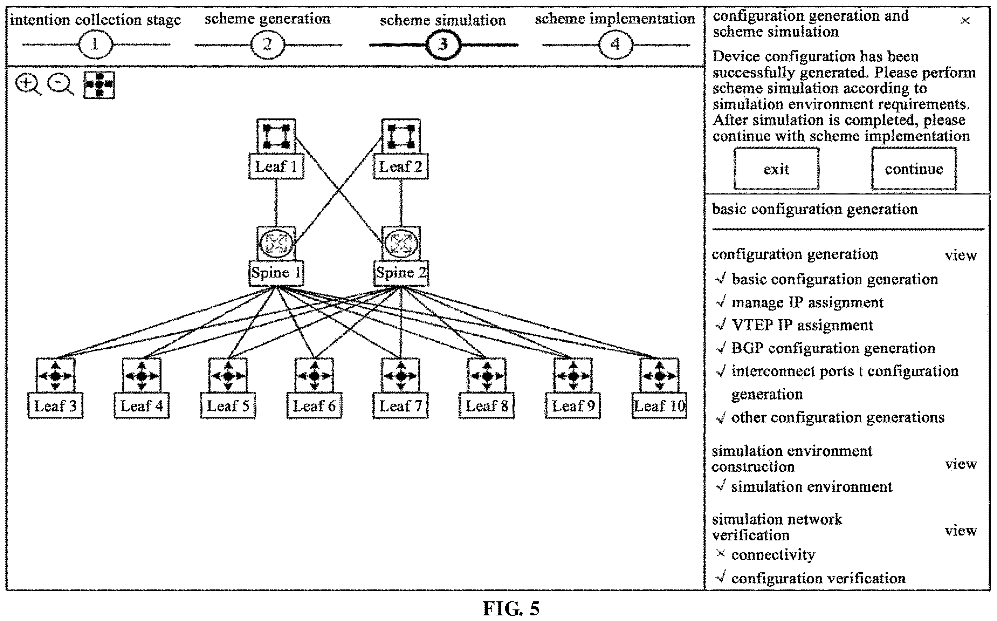

Fig. 5 shows an interface of the scheme simulation stage. A simulation evaluation result is displayed at the lower right corner on the interface of the scheme simulation stage, including configuration generation, simulation environment construction, and simulation network verification and like. The configuration generation can include basic configuration generation, Border Gateway Protocol (BGP) configuration generation and like. The simulation network verification can include connectivity, configuration verification and like. The user can click the view button to view the simulation evaluation result in various aspects in detail.

In Fig. 5, the current network construction scheme does not meet the connectivity requirement, i.e. the simulation evaluation fails. The electronic device can modify the network construction scheme until the simulation evaluation is successful.

After the simulation evaluation is successful, users can click the "Continue" button in the upper right corner, in response to the user's operation of clicking the "Continue" button, the electronic device enters the scheme implementation stage.

### 4) Scheme implementation stage

Network cabling is performed based on the device information and link information output from the network construction scheme. After the cabling is completed, the user can click the "Start Implementation" button to deploy and implement the scheme, thereby completing the device online (i.e. configuration of the network device) and management of the network device in an automated manner.

In this method of network planning and construction, the input intention is a highly specialized network language, such as the number of spine nodes, leaf nodes, and border leaf nodes, as well as whether the networking form is single machine or M-LAG. This kind of network language is difficult for the user to understand and requires professional network administrator to understand. For the business level intentions that the user are truly concerned about, such as how many computing resources need to be connected to the network, requirement for network reliability, specific requirement for network bandwidth and like, the electronic device does not have the ability to understand these intentions. In other words, the existing methods of network planning and construction are not user-friendly.

In addition, in the existing methods of network planning and construction, only fixed intentions can be collected and understood. When there are new and changing intentions, the electronic device will not be able to understand the new and changing intentions and cannot configure the network device. For example, when the network size increases, it is necessary to support the addition of a layer of access layer network device roles (i.e. access nodes), while only network collection and construction of spine nodes, leaf nodes, and border leaf node roles is supported currently, without the ability to automatically expand network intention.

In addition, the electronic device can only configure the network device based on a fixed intention and a pre-configured network construction scheme, and the pre-configured network construction scheme is limited and cannot adapt to a new scenario or a networking requirement by itself. That is, the ability to automatically generate network construction schemes is limited to: automatically converting the fixed network intention of the number of network devices and network device networking forms open to user input into the network construction scheme. For new networking forms and requirements, codes need to be redeveloped to achieve adaptation and transformation logic.

In order to increase the understanding ability of user business level intention, improve the expansion ability of intention collection, and enhance the adaptability to scenarios and networking, an example of the disclosure provides a network planning and construction method, which is applied to electronic device such as a computer, a server, a SDN controller, etc. For ease of description, the electronic device will be the execution subject in the following and do not have a limiting effect.

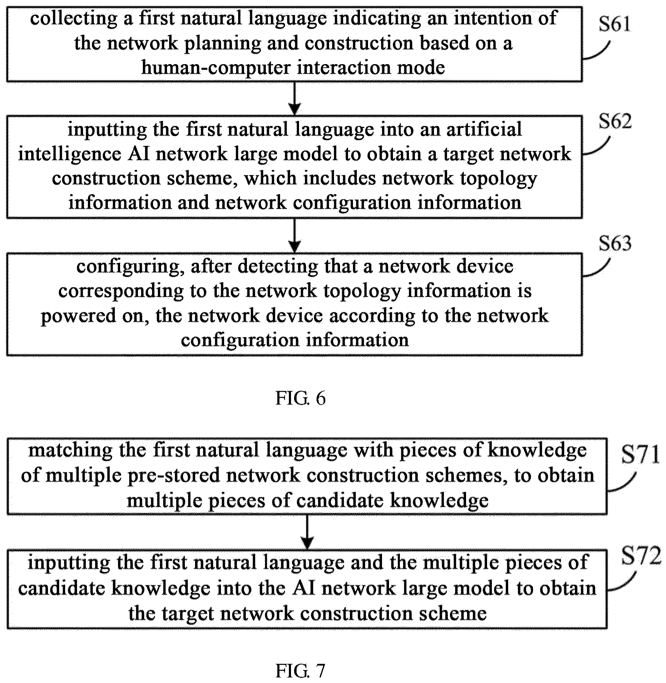

Referring to Fig. 6, Fig. 6 is a flow chart of a method for network planning and construction provided in an example of the present disclosure, which includes the following blocks.

Block S61, collecting a first natural language indicating an intention of the network planning and construction based on a human-computer interaction mode.

Block S62, inputting the first natural language into an artificial intelligence AI network large model to obtain a target network construction scheme, wherein the target network construction scheme includes network topology information and network configuration information.

Block S63, configuring, after detecting that a network device corresponding to the network topology information is powered on, the network device according to the network configuration information.

In the technical solution provided in the examples of the present disclosure, the natural language is to express the intention of the user, namely the intention of network planning and construction. The natural language is a language that is easy for the user to understand and does not require a professional knowledge background. Therefore, using the natural language to express the intention of the user achieves the network planning and construction, and increases the ability of understanding user's business level intention. In addition, in the technical solution provided in the examples of the present disclosure, the AI network large model is to analyze and process the natural language (i.e. the first natural language) that expresses the intention of the user, to obtain the target network construction scheme that meets the intention of the network planning and construction. Due to the strong natural language processing ability of the AI network large model, even there are new and changing intentions, the AI network large model can analyze and obtain the desired target network construction scheme, improve the scalability of intention collection, and enhance the adaptation ability to scenarios and networking.

The method for network planning and construction provided in an example of the present disclosure can include four stages: an intention perception stage corresponding to block S61, an intention analysis stage and an intention decision stage corresponding to block S62, and an intention execution stage corresponding to block S63.

In the block S61, the first natural language is any natural language for indicating the intention of the network planning and construction. The first natural language can be a text, a voice or etc., and there is no restriction on the form of the first natural language.

The electronic device can provide multiple human-computer interaction modes for the user. The user inputs the first natural language to the electronic device through the multiple human-computer interaction modes, and then the electronic device collects the first natural language input by the user based on the multiple human-computer interaction modes.

In one example, the electronic device provides a human-computer interaction dialog box, the block S61 can include: presenting the human-computer interaction dialog box; receiving the first natural language indicating the intention of the network planning and construction input by a user in the human-computer interaction dialog box.

For example, the electronic device presents the human-computer interaction dialog box, the user inputs text in the human-computer interaction dialog box. After the electronic device detects the text in the human-computer interaction dialog box, the electronic device takes the text as the first natural language.

For example, the electronic device can present a human-computer interaction dialog box, the user inputs voice in the human-computer interaction dialog box. The electronic device can receive the voice input by the user through a voice receiver (such as a microphone) and directly take the voice as the first natural language; or, the electronic device can recognize the voice, and convert the voice into text, take the text as the first natural language.

Through the human-computer interaction dialog box, the interaction between the user and the electronic device can be visually presented, improving the friendliness of network planning and construction.

When the human-computer interaction dialog box is used for human-computer interaction, the electronic device may also display in the human-computer interaction dialog box, prompt information (i.e., the first prompt information) for guiding the input of the intention of the network planning and construction. The first prompt information may include specific contents that the user needs to input into the human-computer interaction dialog box, such as the first prompt information may include "the number of physical servers to be accessed", "the convergence ratio of uplink and downlink bandwidth", and so on, and the first prompt information may include requirements for the contents input by the user, such as the first reminder information may include requirements for the contents input by the user. The first prompt information may also include a requirement for the user to input content, such as the first prompt information may include "please use natural language to input the demand for network planning and construction", etc., and the content of the first prompt information is not limited herein. By displaying the first prompt information in the human-computer interaction dialog box, the electronic device can guide the user to input the intention of network planning and construction to more accurately meet the user's needs, and at the same time facilitate the user's operation.

In another example, the electronic device may also receive a natural language input by the user in another device, and take the natural language as the first natural language. Taking the electronic device as a Personal Computer (PC) terminal and the other device as a mobile phone terminal as an example, the user may input the natural language in the mobile phone terminal, the mobile phone terminal sends the natural language to the PC terminal, and the PC terminal takes the received natural language as the first natural language. The human-computer interaction mode between the electronic device and the user is not limited here.

In the above block S62, the AI network large model may be a generalized AI network large model or an AI network large model obtained by pre-training based on the generalized AI network large model in combination with a large amount of DCN corpus, without limitation. For the AI network large model, the training process is: the DCN corpus is input into the AI network large model; after the AI network large model acquires the DCN corpus, it learns the contextual knowledge in the DCN corpus.

In an example of the present disclosure, the DCN corpus may include: DCN networking information, topology information, device information, link information, port information, security information, routing information, network policy information, reliability information, consistency information, stability information, performance load information, capacity information, system information, and resource information, etc., and there is no limitation on the DCN corpus herein.

The network topology information is the topology between the network devices in the planning and construction network, and the network topology information can include network architecture information, interconnecting device information, device role information, link information, and port information, etc. The network configuration information is the information required to configure the network device, and the network configuration information can include network device information, IP and VTEP IP resource pools, IP addresses and VTEP IP addresses of various network devices, and routing information, etc. The network device information may include the type, model, and quantity of network devices, etc., and there is no limitation herein as to the contents included in the network topology information and the network configuration information.

In an example of the present disclosure, the network device may be a switch and a router, etc., and there is no limitation on the network device herein.

The electronic device inputs the collected first natural language into the AI network large model, causing the AI network large model to output a network construction scheme that satisfies the user's intention of network planning and construction based on the first natural language, and the electronic device takes the network construction scheme output by the AI network large model as a target network construction scheme.

In an example of the present disclosure, the electronic device may call an interface (i.e., the first interface) corresponding to the AI network large model to input the first natural language into the AI network large model. The interface may be an Application Programming Interface (API), then the first interface is the API corresponding to the AI network large model, and there is no limitation herein on the manner in which the electronic device inputs the first natural language into the AI network large model.

In the above block S63, the electronic device may detect, in real time, whether a network device (i.e., a network device corresponding to the network topology information) in the planning and construction network is powered on. If the electronic device detects that the network device is powered on, the electronic device may configure an IP address from an IP resource pool, configure a VTEP IP address from a VTEP IP resource pool, and configure routing information, etc., for the powered-on network device. The configuration content is not limited here. If no network device is detected to be powered on, the electronic device continues to detect until a network device is detected to be powered on.

In an example of the present disclosure, after detecting that all network devices are powered on, the electronic device may configure all network devices together. The electronic may also configure any network device directly after detecting that this network device is powered on, without waiting for all network devices to be powered on, which is not limited here.

In an example of the present disclosure, after detecting that a network device is powered on, the electronic device may detect whether the network device information, network architecture information, interconnecting device information, device role information, link information, and port information are correct based on the network topology information and network configuration information in the target network construction scheme via the AI network large model. For example, the electronic device may detect, through the AI network large model, whether the type, model, position in the network architecture, other network devices connected to the network device, etc. of the powered-on network device are correct. If any of the above information is detected to be incorrect, it means that the network configurator has made an error in the process of network cabling (i.e., the process of powering on the network device) based on the network device information, the network architecture information, the interconnecting device information, the device role information, the link information, and the port information, and then the electronic device can provide feedback to the user so that the user can adjust the cabled network until all network devices are correctly powered on.

In some examples, referring to Fig. 7, Fig. 7 is a detailed schematic diagram of block S62 provided in an example of the present disclosure, which can include the following blocks.

Block S71, matching the first natural language with pieces of knowledge of multiple pre-stored network construction schemes, to obtain multiple pieces of candidate knowledge.

Block S72, inputting the first natural language and the multiple pieces of candidate knowledge into the AI network large model to obtain the target network construction scheme.

In the technical solution provided by examples of the present disclosure, the electronic device pre-establishes a scheme knowledge base including pieces of knowledge of multiple network construction schemes, and the scheme knowledge base with rich network experience is used as an effective supplement to the AI network large model for recommending a network construction scheme in a planning and construction scenario, so that the AI network large model can recommend a target network construction scheme based on the multiple pieces of candidate knowledge selected from the scheme knowledge base and the intention of network planning and construction, thereby improving the accuracy of the recommended network construction scheme.

In the above block S71, the knowledge of the network construction scheme is related to the network planning and construction scenario, which may be textual information of the actual network construction scheme or textual information on which the network construction scheme is generated, without limitation.

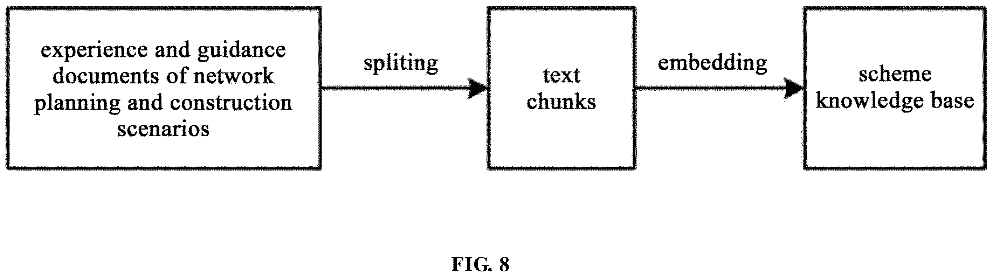

In an example of the present disclosure, the electronic device may establish a scheme knowledge base through the following ways: obtaining experience and guidance documents related to the network planning and construction scenarios as original knowledge, splitting the original knowledge to obtain a plurality of text chunks, and embedding each text chunk, and storing each embedded text chunk as knowledge of the network opening scheme in a database to obtain pieces of knowledge of the network construction schemes, thereby forming a scheme knowledge base. Fig. 8 shows a schematic diagram of the process of establishing a scheme knowledge base. The original knowledge can include knowledge of scheme scenarios, business requirements, design principles, design experience, landing cases, scheme value, etc. Here, the content of the original knowledge and the way in which the electronic device establishes the scheme knowledge base are not limited.

In an example of the present disclosure, the process of embedding may be as follows: determining, according to the correspondence between pre-stored characters and feature values, a feature value corresponding to each character in a text chunk, and concatenating the feature values corresponding to the characters according to the order of the characters to obtain a vector corresponding to the text chunk, thus realizing the embedding of the text chunk.

The process of embedding can also be as follows: preprocessing a text chunk to remove invalid characters, conjunctions and other useless strings in the text chunk, such as removing commas, spaces, words such as "and" and "but"; determining, according to the corresponding relationship between the pre-stored characters and the feature values, a feature value corresponding to each character in the preprocessed text chunk, and concatenating the feature values corresponding to the characters according to the order of the characters to obtain a vector corresponding to the text chunk, thus realizing the embedding of the text chunk.

In the example of the present disclosure, the process of embedding can also be realized in other ways, such as converting the text chunk into a vector represented by 0, 1.

After collecting the first natural language, the electronic device performs embedding processing on the first natural language. Here, the electronic device may treat the first natural language as a text chunk, and adopt the above-described embedding processing for the text chunk to convert the first natural language into vectors represented by 0, 1 to obtain the embedded first natural language.

The electronic device can use similarity algorithms such as cosine similarity and Euclidean distance to match the embedded first natural language with pieces of knowledge of multiple network construction schemes in the scheme knowledge base in terms of similarity, and according to the matching results, the first preset number of vectors that are most similar to the first natural language are obtained, that is to say, pieces of knowledge of multiple network construction schemes that are most similar to the intention of the network planning and construction are obtained, and these pieces of knowledge of multiple network construction schemes are the multiple pieces of candidate knowledge, and there is no limit to the value of the preset number.

In the example of the present disclosure, corresponding to the pieces of knowledge of the network construction scheme in the scheme knowledge base, the multiple pieces of candidate knowledge obtained by the electronic device may be textual information of the actual network construction scheme or textual information based on which the network construction scheme is generated, and there is no limitation on this.

In an example of the present disclosure, the electronic device can continuously update the scheme knowledge base. That is, the electronic device can obtain new experience and guidance documents (i.e. original knowledge) related to network planning and construction scenarios, and after splitting and embedding the new original knowledge, the electronic device can store the same in the database to update the scheme knowledge base. Furthermore, the electronic device can use the updated scheme knowledge base for matching, obtaining multiple pieces of richer and more accurate candidate knowledge, which is not limited here.

In the above block S72, the electronic device adds the obtained multiple pieces of candidate knowledge as context to the Prompt template along with the first natural language, inputs the added Prompt template to the AI network large model, so that the AI network large model performs context reasoning such as information combination and exclusion according to the intention of the network planning and construction on the basis of the multiple pieces of candidate knowledge, and obtains and outputs a recommended network construction scheme, and the electronic device takes a network construction scheme output by the AI network large model as the target network construction scheme.

In an example of the present disclosure, the electronic device may call a request interface to input the first natural language and the multiple pieces of candidate knowledge (i.e., the added Prompt template) into the AI network large model, without limitation.

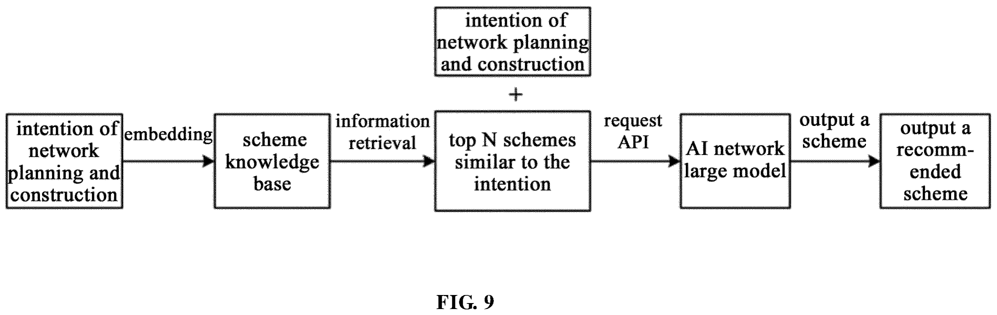

Fig. 9 shows a complete flow chart for obtaining the target network construction scheme based on the AI network large model by the electronic device. The electronic device collects the intention of network planning and construction (i.e. the first natural language) input by the user, performs embedding on the intention of network planning and construction, and performs information retrieval in the scheme knowledge base. That is, the embedded intention of network planning and construction is matched with the embedded text chunks in the scheme knowledge base on similarity to obtain the top N (i.e. a preset number of) pieces of network construction scheme knowledge (i.e. pieces of candidate knowledge) with the highest similarity to the intention of network planning and construction. The electronic device calls a request API (i.e. request interface) and inputs the obtained top N pieces of scheme knowledge and the intention of network planning and construction into the AI network large model, so that the AI network large model performs context reasoning based on the top N pieces of scheme knowledge with the highest similarity and the intention of network planning and construction, and then outputs a recommended scheme, i.e., the target network construction scheme.

In an example of the present disclosure, if the first natural language fails to match with the pieces of knowledge of the multiple network construction schemes (i.e., no candidate knowledge is obtained), it means that the similarity between the pieces of knowledge of the multiple network construction schemes and the first natural language is too low, and the electronic device can input the first natural language (i.e., the intention of network planning and construction input by the user) directly into the AI network large model, and the AI network large model performs context reasoning based only on the first natural language and pieces of pre-learned knowledge to obtain the target network construction scheme, further improving the ability of the network planning and construction method provided by the examples of the present disclosure to automatically generate network construction schemes under different scenarios, and improving the ability to adapt to scenarios and group networks.

Here, pieces of pre-learned knowledge may be knowledge input into the AI large language model by the electronic device during the training stage, the pre-training stage.

In some examples, the electronic device may fine-tune the AI network large model. The electronic device obtains a sample natural language and a sample network planning and construction scheme corresponding to the sample natural language; and utilizes the sample natural language and the sample network planning and construction scheme to fine-tune the AI network large model. The sample natural language and the corresponding sample network planning and construction scheme are pre-constructed samples of network planning and construction scenarios, one sample is one labeled data, the content of the sample is the sample natural language, and the label of the sample is the real network construction scheme corresponding to that sample natural language, i.e., the sample network planning and construction scheme.

The electronic device can pre-employ multiple samples of network planning and construction scenarios (i.e., multiple sample natural languages and corresponding sample network planning and construction schemes) to construct a sample set of network planning and construction scenarios (i.e., a labeled data set). This sample set is actually multiple question and answer pairs, where the questions are sample natural languages and the answers are sample network planning and construction schemes. The electronic device feeds the sample set into the AI network large model, realizing the learning of these question answer pairs by the AI network large model, and completing the fine-tuning of the AI network large model.

In an example of the present disclosure, the electronic device may continuously update the sample set of network planning and construction scenarios, that is, the electronic device may continuously acquire new sample natural languages and corresponding sample network planning and construction schemes to fine-tune the AI network large model.

The electronic device may also continuously update the DCN corpus, and utilize the updated DCN corpus, enriched network planning and construction scenarios, and the continuously updated scheme knowledge base to train and update the AI network large model, and there is no limitation herein as to the manner of training and updating the AI network large model.

Through the technical solution provided by the examples of the present disclosure, the AI network large model is fine-tuned using the labeled data set of the network planning and construction scenarios, so that the AI network large model is more adapted to the network planning and construction scenarios, and thus, the electronic device is able to realize self-development and evolution when configuring the network device in the network planning and construction scenarios. In addition, the electronic device can also adopt the continuously updated scheme knowledge base, new DCN corpus, and rich network planning and construction scenarios to train and update the AI network large model, so as to realize the self-development and evolution of the recommendation and generation capability of network construction scheme in the network planning and construction scenarios, which further improves the ability of the electronic device to realize self-development and evolution.

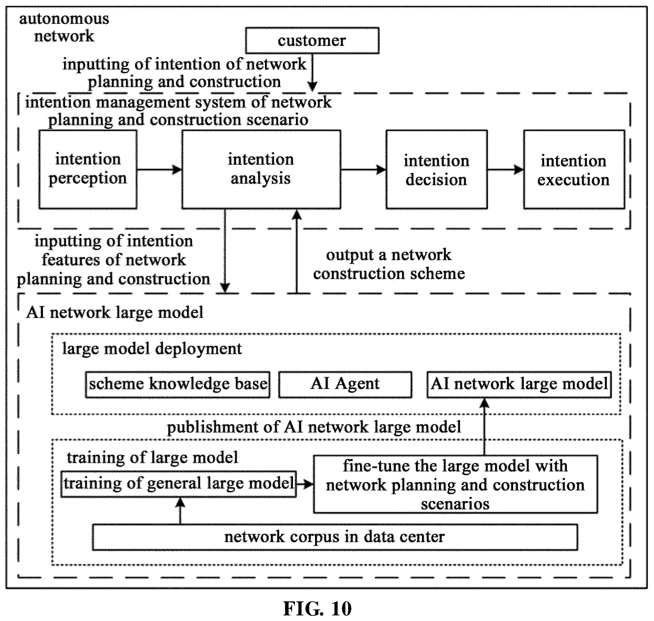

Fig. 10 shows a schematic diagram of a processing logic in the intention analysis stage, taking the electronic device as an example for intention management of network planning and construction scenario. In the autonomous network in the data center, an intention management system of the network planning and construction scenario receives the intention of network planning and construction (i.e. the first natural language) input by the customer (i.e. the user), and performs intention perception, intention analysis, intention decision, and intention execution. In the intention analysis stage, the intention management system of the network planning and construction scenario performs analysis and feature extraction (i.e. embedding) of the intention of network planning and construction, to obtain intention features of network planning and construction (i.e. the embedded first natural language), and input the intention features of network planning and construction into the network large model (such as the AI network large model).

In an example of the present disclosure, when deploying the AI network large model, a scheme knowledge base and an AI Agent framework that assists the work of the AI network large model may also be deployed. The intention management system of the network planning and construction scenario outputs a network construction scheme (i.e., a target network construction scheme) based on the scheme knowledge base, the AI Agent, and the AI network large model.

Among them, the scheme knowledge base can assist the AI network large model in context reasoning with less but most relevant knowledge to obtain the target network construction scheme. The AI Agent framework can call the API with rich SDN controllers based on the tool set, which can realize the graphical rendering capability of the network planning and construction scenario scheme as well as other capabilities, and the AI Agent framework can continuously enrich the tool set for interaction between network planning and construction scenarios and the SDN controllers, and improve the intention execution capability of the network planning and construction scenarios.

As shown in Fig. 10, the training method for the large model can be as follows: using DCN corpus to train the general large model, and then fine-tuning the trained large model with annotated datasets for network planning and construction scenarios, ultimately obtaining a reliable AI network large model and publishing the AI network large model.

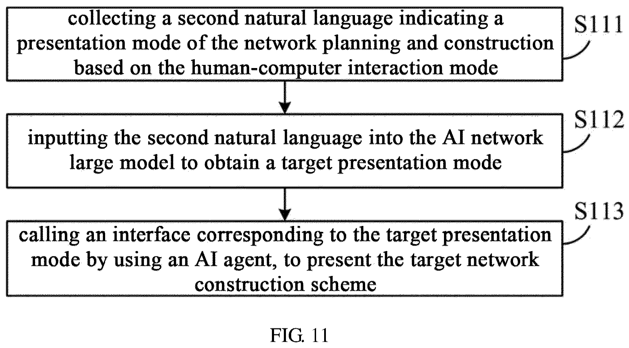

In some examples, the electronic device may display the network construction scheme based on a human-computer interaction mode. As shown in Fig. 11, Fig. 11 is a schematic flow chart for displaying a network construction scheme provided in an example of the present disclosure, which can include the following blocks.

Block S111, collecting a second natural language indicating a presentation mode of the network planning and construction based on the human-computer interaction mode.

Block S112, inputting the second natural language into the AI network large model to obtain a target presentation mode.

Block S113, calling an interface corresponding to the target presentation mode by using an AI agent, to present the target network construction scheme.

In the technical solution provided by the examples of the present disclosure, based on the stronger natural language processing capability of the AI network large model, the AI network large model is adopted to analyze and process the natural language (i.e., the second natural language) of the presentation mode that expresses the user's needs to obtain the target presentation mode, which improves the interactivity, and adopts the AI Agent to call the corresponding API to realize the display of the target network construction scheme in the target presentation mode.

In the above block S111, the second natural language is any natural language intended to indicate the presentation mode of the network construction scheme, and the second natural language may be text or voice, etc. The presentation modes of the network construction scheme may include text and graphics, etc., and there is no limitation herein on the form of the second natural language and the presentation mode of the network construction scheme.

The electronic device can provide multiple human-computer interaction modes for the user. The user inputs the second natural language to the electronic device through the multiple human-computer interaction modes, and then the electronic device collects the second natural language input by the user based on the multiple human-computer interaction modes.

When the electronic device provides a human-computer interaction dialog box, the block S111 can include: presenting a human-computer interaction dialog box; receiving the second natural language indicating the presentation mode of the network planning and construction input by a user in the human-computer interaction dialog box. In this case, the electronic device may also display in the human-computer interaction dialog box, prompt information (i.e., second prompt information) for guiding the input of the presentation mode of the network construction scheme, such as the second prompt information may be "please input the presentation mode", etc., and the content of the second prompt information is not limited herein. Through the human-computer interaction dialog box, the interaction between the user and the electronic device can be presented intuitively, and by displaying the prompt information in the human-computer interaction dialog box, the user can be guided to input, which satisfies the user's needs and facilitates the user's operation.

In an example of the present disclosure, the electronic device collects the second natural language based on the human-computer interaction mode in a manner similar to the above-described manner of collecting the first natural language, please refer to the relevant description of block S61.

In the above block S112, the electronic device inputs the collected second natural language into the AI network large model, causing the AI network large model to output a presentation mode that satisfies the user's needs based on the second natural language, and the electronic device takes the presentation mode as a target presentation mode.

In an example of the present disclosure, the electronic device may call an interface (i.e., the first interface) corresponding to the AI network large model to input the second natural language into the AI network large model, without limitation.

In the above block S113, the electronic device adopts an AI Agent to call an interface (i.e., the second interface) corresponding to the target presentation mode, and realizes presenting the target network construction scheme based on the target presentation mode.

For example, if the target presentation mode is to display in the form of graphics (i.e., graphical presentation), the electronic device adopts an AI Agent to call an interface (i.e., API) corresponding to the graphical presentation to present the target network construction scheme in the form of graphics, i.e., present the network topology information (such as the network architecture information, link information, and the port information of the network device, etc.) that is included in the target network construction scheme in the form of graphics. If the target presentation mode is to present in the form of text, the electronic device adopts an AI Agent and calls an interface corresponding to textual presentation to present the network topology information and network configuration information included in the target network construction scheme in the form of text.

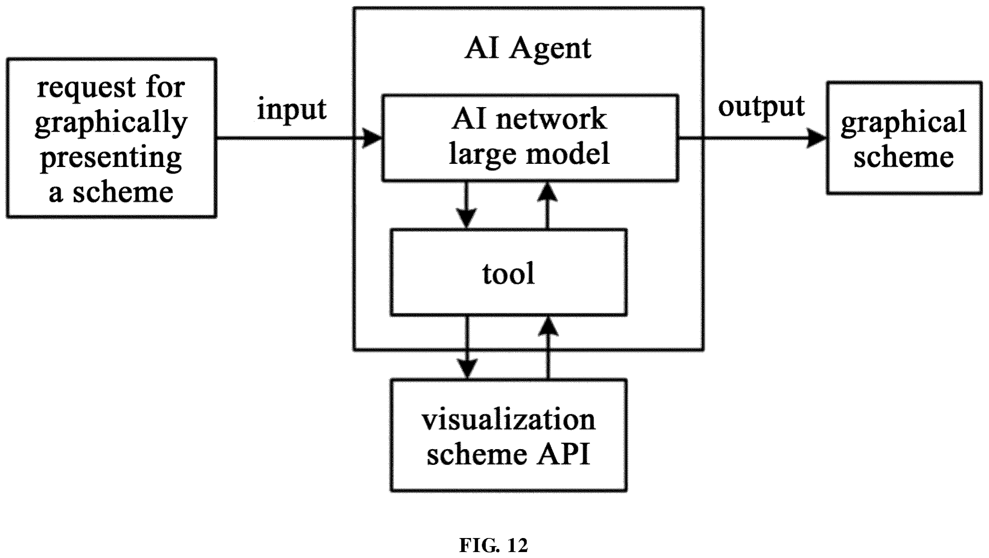

Fig. 12 shows a schematic diagram of a graphical presentation using an AI agent framework. The electronic device obtains a request for presenting a network construction scheme in the form of graphical presentation (i.e. second natural language) input by the user, inputs the request into the AI agent framework. The AI network large model performs reasoning and decision-making on the request, outputs a graphical presentation mode. The AI agent selects a preset tool to call a visualization scheme API (i.e. second interface), and outputs the network construction scheme in the form of graphical presentation.

In an example of the present disclosure, the electronic device may execute blocks S111~blocks S113 after obtaining the target network construction scheme, and display the obtained target network construction scheme. Before obtaining the target network construction scheme, the electronic device may also execute blocks S111~blocks S112 to obtain a target presentation mode, and execute block S113 after obtaining the target network construction scheme to present the obtained target network construction scheme. For example, the electronic device may collect a second natural language at the same time when collecting a first natural language, and input the first natural language and the second natural language together into the AI network large model to obtain a target network construction scheme and a target presentation mode; the electronic device may also collect a second natural language after collecting the first natural language. The timing of execution of blocks S111 to S113 is not limited herein.

In some examples, after executing the above block S113 of presenting the target network construction scheme, the electronic device may also adjust the presented target network construction scheme based on user operations. The user operations may include operations such as dragging and editing, and the user operations are not limited herein. The electronic device may provide multiple human-computer interaction modes for the user, and the user may operate the presented target network construction scheme through the multiple human-computer interaction modes, and then the electronic device may collect user operations based on the multiple human-computer interaction modes and adjust the presented target network construction scheme based on the user operations.

For example, when the target presentation mode is in the form of a graph, the electronic device may perform human-computer interaction based on the graphical interface, collect operations such as dragging and dropping and editing performed by the user in the graphical interface on the presented target network construction scheme, and perform corresponding dragging and dropping and editing and the like on the presented target network construction scheme based on the collected operations, so as to realize adjustments to the target network construction scheme. In the example of the present disclosure, the electronic device may also adjust the presented target network construction scheme based on the human-computer interaction dialog box, which is not limited here.

The electronic device makes adjustments to the presented target network construction scheme based on user operations, so that the adjusted target network construction scheme is more in line with the user's intention and meets the user's expectations. Thereafter, the electronic device may perform the above block S63 of configuring, after detecting that a network device corresponding to the network topology information included in the presented target network construction scheme is powered on, the network device according to the network configuration information included in the presented target network construction scheme.

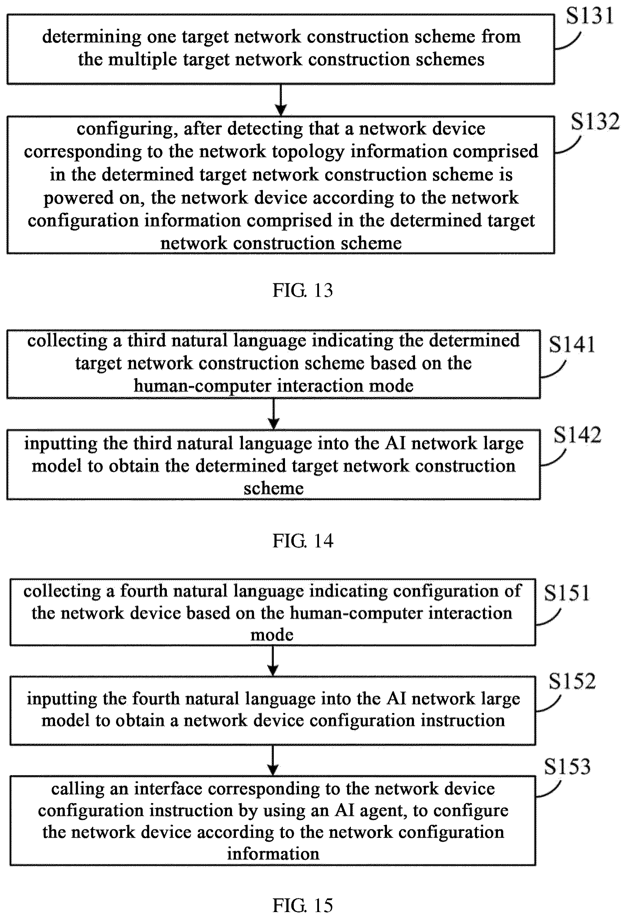

In some examples, in the block S62, the AI network large model can output multiple target network construction schemes. As shown in Fig. 13, Fig. 13 is a first schematic flow chart for configuring a network device provided in an example of the present disclosure, which can include the following blocks.

Block S131, determining one target network construction scheme from the multiple target network construction schemes.

Block S132, configuring, after detecting that a network device corresponding to the network topology information comprised in the determined target network construction scheme is powered on, the network device according to the network configuration information comprised in the determined target network construction scheme.

In the technical solution provided by examples of the present disclosure, in the case where the AI network large model outputs multiple target network construction schemes, the electronic device can determine, from the multiple target network construction schemes, one target network construction scheme that best meets the user's intention of network planning and construction and configure the network device in accordance with the network configuration information included in the determined target network construction scheme, which further improves the accuracy of network construction scheme generation and recommendation.

In the block 131, the electronic device determines one target network construction scheme from the multiple target network construction schemes output by the AI network large model. For example, the electronic device may receive information indicating the determined target network construction scheme input by a user, and determine one target network construction scheme based on the user input. Further for example, the electronic device may determine one target network construction scheme at random from multiple target network construction schemes; or, the electronic device may also determine one target network construction scheme from the multiple target network construction schemes based on a preset rule, which may be set according to the actual situation, and the preset rule may be as follows: selecting a network construction scheme with the best scalability. The manner in which the electronic device determines a target network construction scheme is not limited herein.

In the above block S132, the determined target network construction scheme is the target network construction scheme intended to configure the network device. The electronic device detects in real-time whether a network device corresponding to the network topology information comprised in the determined target network construction scheme is powered on. After detecting that the network device is powered on, the powered-on network device is configured according to the network configuration information comprised in the determined target network construction scheme. The specific configuration mode can be found in the relevant description in block S63 above.

In an example of the present disclosure, before executing block S131, the electronic device may present the multiple target network construction schemes output by the AI network large model, and the specific presentation mode may be referred to the relevant description in FIG. 11 above. After presenting the multiple target network construction schemes, the electronic device may also fine-tune the multiple presented target network construction schemes, determine one fine-tuned target network construction schemes from the multiple fine-tuned target network construction schemes, and configure the network device in accordance with the determined fine-tuned target network construction scheme.

In some examples, the electronic device may determine one target network construction scheme based on a human-computer interaction mode. As shown in Fig. 14, Fig. 14 is a detailed schematic diagram of block S131 provided in an example of the present disclosure, which can include the following blocks.

Block S141, collecting a third natural language indicating the determined target network construction scheme based on the human-computer interaction mode;
Block S142, inputting the third natural language into the AI network large model to obtain the determined target network construction scheme.

In the technical solution provided by examples of the present disclosure, based on the stronger natural language processing capability of the AI network large model, the AI network large model is to analyze and process the natural language (i.e., the third natural language) that expresses the user's needs and determines the target network construction scheme, and obtain the determined target network construction scheme, which improves the interactivity, and enables the determined target network construction scheme to be more in line with the user's expectations, and improves the user experience.

In the block S141, the third natural language is any natural language for indicating the determined target network construction scheme. The third natural language can be a text, a voice or etc., and there is no restriction on the form of the third natural language.

The electronic device can provide multiple human-computer interaction modes for the user. The user inputs the third natural language to the electronic device through the multiple human-computer interaction modes, and then the electronic device collects the third natural language input by the user based on the multiple human-computer interaction modes.

When the electronic device provides a human-computer interaction dialog box, the block S141 can include: presenting a human-computer interaction dialog box; receiving the third natural language indicating the determined target network construction scheme input by a user in the human-computer interaction dialog box. In this case, the electronic device may also display in the human-computer interaction dialog box, prompt information (i.e., a third prompt information) for guiding the input of the determined target network construction scheme, such as the third prompt information may read "Please enter the determined network construction scheme" or "Please enter a preference for the overall requirements of the network construction scheme", etc, the content of the third prompt information is not limited here. Through the human-computer interaction dialog box, the interaction between the user and the electronic device can be presented intuitively, and by displaying the prompt information in the human-computer interaction dialog box, the user can be guided to input the relevant information for determining the target network construction scheme, which satisfies the user's needs and facilitates the user's operation.

In the example of the present disclosure, the electronic device collects the third natural language based on the human-computer interaction mode in a manner similar to the manner of collecting the first natural language described above, which can be described in relation to the above block S61.

In the above block S142, the electronic device inputs the captured third natural language into the AI network large model, causing the AI network large model to output one target network construction scheme based on the third natural language, and the electronic device takes the target network construction scheme as the determined target network construction scheme.

In an example of the present disclosure, the electronic device may call an interface corresponding to the AI network large model (i.e., the first interface) to input the third natural language into the AI network large model, without limitation.

In the example of the present disclosure, the timing of executing block S141 and block S142 can be specifically categorized into the following two cases.

Situation 1, the electronic device, after obtaining the multiple target network construction schemes, executes block S141 and block S142 to collect the third natural language and obtain the determined target network construction scheme.

Situation 2, the electronic device, before obtaining the multiple target network construction schemes, executes block S141 to collect the third natural language. For example, the electronic device may collect the third natural language while collecting the first natural language, in which case the electronic device may simultaneously execute block S62 and block S142, inputting the first natural language and the third natural language together into the AI network large model to obtain the determined target network construction scheme. That is, when the network planning and construction intention input by the user carries a preference of the overall requirements of the network construction scheme, the electronic device may input all the contents including the first natural language and the third natural language input by the user into the AI network large model, so that the AI network large model outputs one target network construction scheme, and obtains the determined target network construction scheme. The timing of execution of block S141 and block S142 is not limited herein.

The electronic device may also receive an operation such as clicking, switching, or the like for selecting one target network construction scheme, performed by a user in the electronic device, and in response to the user's operation, determine one target network construction scheme from multiple target network construction schemes. The manner in which the electronic device determines one target network construction scheme is not limited herein.

In some examples, the electronic device may configure the network device based on human-computer interaction mode. As shown in Fig.15, Fig. 15 is a second schematic flow chart for configuring a network device provided in an example of the present disclosure, the block S63 can include the following blocks.

Block S151, collecting a fourth natural language indicating configuration of the network device based on the human-computer interaction mode.

Block S152, inputting the fourth natural language into the AI network large model to obtain a network device configuration instruction.

Block S153, calling an interface corresponding to the network device configuration instruction by using an AI agent, to configure the network device according to the network configuration information.

In the technical solution provided by examples of the present disclosure, based on the stronger natural language processing capability of the AI network large model, the AI network large model is to analyze and process the natural language (i.e., the fourth natural language) that expresses the configuration of the network device, to obtain the network device configuration instruction, and to call a corresponding API by using an AI agent to configure the network device based on the target network construction scheme .

In the block S151, the fourth natural language is any natural language for indicating the configuration of the network device. The fourth natural language can be a text, a voice or etc., and there is no restriction on the form of the fourth natural language.

The electronic device can provide multiple human-computer interaction modes for the user. The user inputs the fourth natural language to the electronic device through the multiple human-computer interaction modes, and then the electronic device collects the fourth natural language input by the user based on the multiple human-computer interaction modes.

When the electronic device provides a human-computer interaction dialog box, the block S151 can include: presenting a human-computer interaction dialog box; receiving the fourth natural language indicating the configuration of the network device input by a user in the human-computer interaction dialog box. In this case, the electronic device may also display in the human-computer interaction dialog box, prompt information (i.e., a fourth prompt information) for guiding the input of execution information for the configuration of the network device, for example, the fourth prompt information may be "please input whether or not to configure the network device", etc., and the content of the fourth prompt information is not limited herein. By means of the human-computer interaction dialog box, the interaction between the user and the electronic device can be visualized, and by displaying the prompt information on the human-computer interaction dialog box, the user can be guided to input information related to whether to configure the network device or not, so as to satisfy the user's needs and facilitate the user's operation.

In some examples, the electronic device may also determine a to-be-executed operation, display prompt information associated with the to-be-executed operation in the human-computer interaction dialog box. The electronic device may detect, in real time, the interface displayed to the user (or the stage at which the scheme is being executed) and the content that has been input by the user (or the operation that has been executed), determine an to-be-executed operation of the electronic device, and display the related prompt information in the human-computer interaction dialog box according to the to-be-executed operation. For example, when the electronic device detects that the interface displayed to the user is an intention decision interface (i.e., is in the intention decision stage) and detects the content input by the user in the last time on the human-computer interaction dialog box was: a natural language (i.e., a second natural language) indicating a presentation mode of a network construction scheme, the electronic device may determine that the to-be-executed operation is: determining one target network construction scheme from the target network construction schemes ( in the case where the AI network large model outputs multiple target network construction schemes), displaying in the human-computer interaction dialog box, third prompt information guiding the input of the determined target network construction scheme.

In the example of the present disclosure, the electronic device collects the fourth natural language based on human-computer interaction mode in a manner similar to the manner of collecting the first natural language described above, which can be described in relation to the above block S61.

In the above block S152, the electronic device inputs the collected fourth natural language into the AI network large model, so that the AI network large model can output network device configuration instructions based on the fourth natural language.

In the example of the present disclosure, the electronic device may call the interface corresponding to the AI network large model (i.e., the first interface) to input the fourth natural language into the AI network large model, without limitation.

In the above block S153, the electronic device adopts an AI Agent to call the interface corresponding to the network device configuration instruction (i.e., the third interface), and adopts the target network construction scheme to configure the network device.

In an example of the present disclosure, after determining a target network construction scheme for configuring a network device, the electronic device may, after detecting the network device being powered on, execute blocks S151~block S153, to collect the fourth natural language to obtain a network device configuration instruction, and configure the network device; the electronic device may also, before detecting the network device being powered on, execute blocks S151~block S152, to collect the fourth natural language to obtain the network device configuration instruction, and after detecting the network device being powered on, execute block S153 to configure the network device, without limitation.

In an example of the present disclosure, the electronic device may display a dialog box icon on the interface, and after the user clicks on the dialog box icon, the electronic device, in response to the user's operation of clicking on the dialog box icon, calls a front-end general API (i.e., the fourth interface) corresponding to the operation of clicking on the dialog box icon, and displays the human-computer interaction dialog box.

In an example of the present disclosure, the electronic device may also continuously update the set of tools for performing the human-computer interaction, i.e., continuously update the interfaces, so that the electronic device may employ an AI Agent to call richer interfaces, and enhance the ability to configure network device in network planning and construction scenarios using the AI Agent.

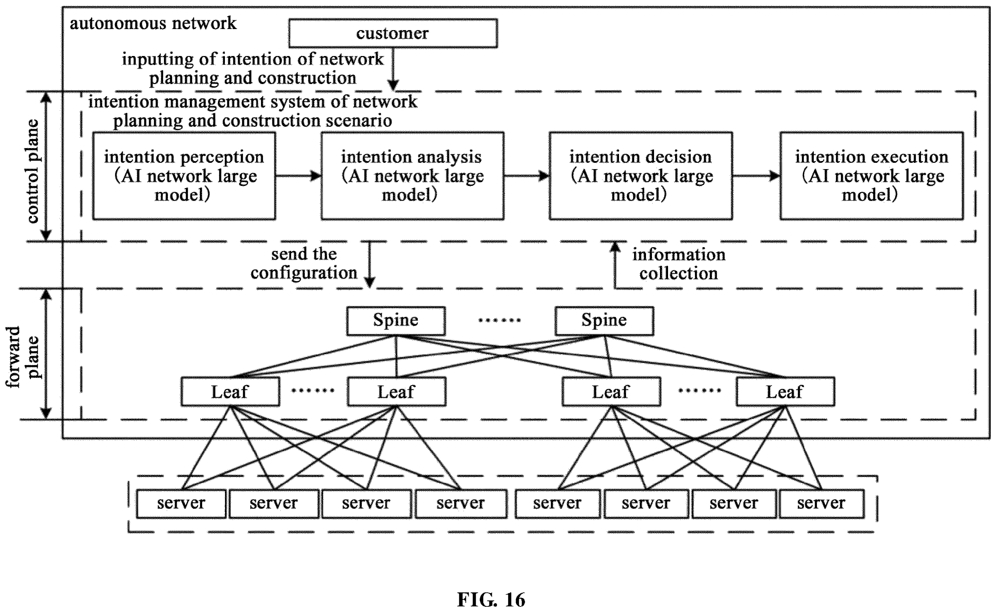

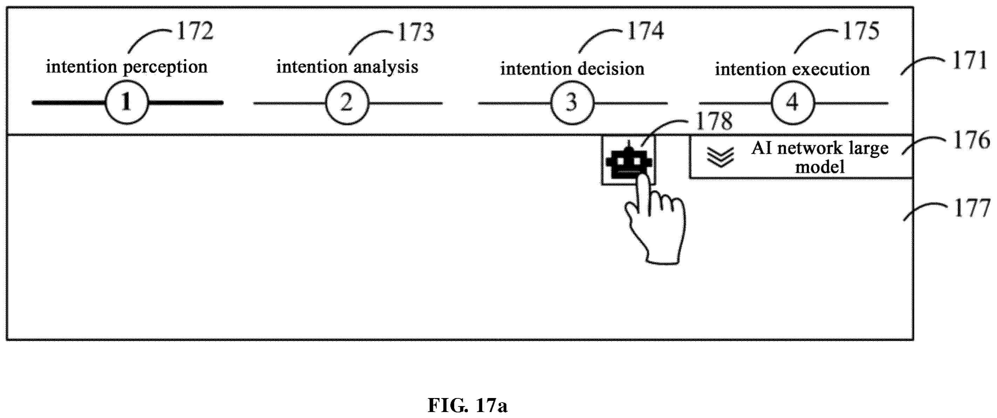

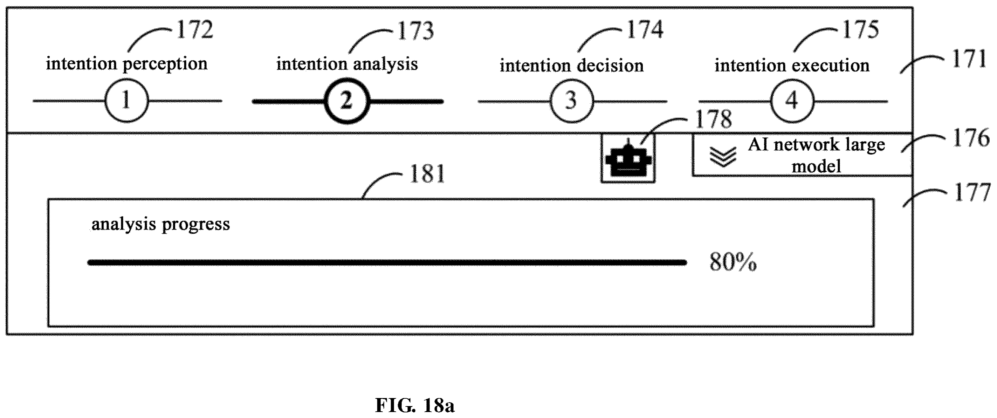

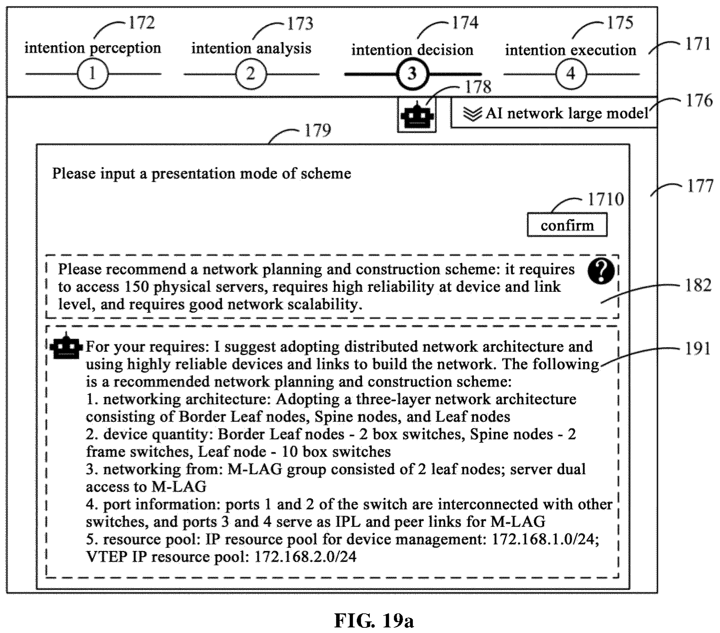

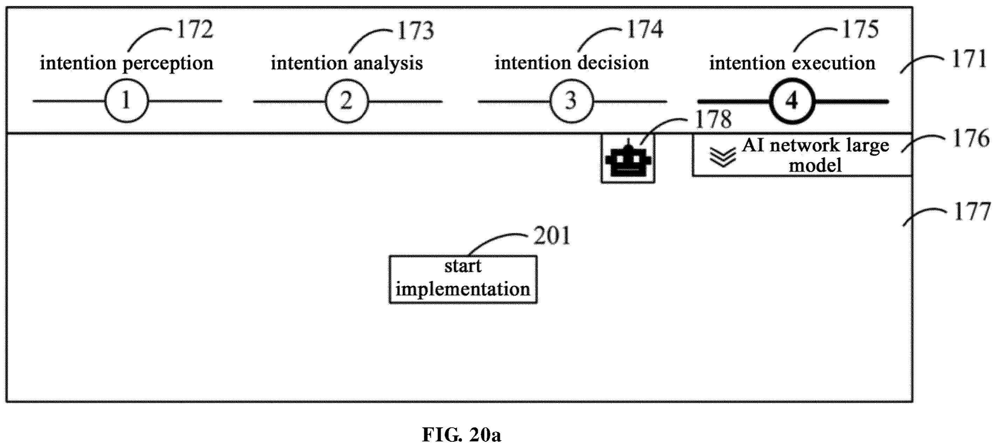

The network planning and construction method provided by examples of the present disclosure is described in detail below based on the network planning and construction method framework shown in Fig. 16 and the SDN controller interfaces shown in Figs. 17a~17c, Figs. 18a∼18e, Figs. 19a∼19e, and Figs. 20a~20b. As an example, the electronic device is an SDN controller and the SDN controller performs human-computer interaction based on a human-computer interaction dialog box, and is not intended to be limiting.

Fig. 16 is a schematic structural diagram of a framework of the method for network planning and construction provided in an example of the present disclosure. As shown in Fig 16, in the autonomous network in the data center, an intention management system of network planning and construction scenario (i.e. SDN controller) of control plane of the autonomous network receives the network planning and construction intention (i.e. first natural language) input from the enterprise system/customer (i.e. user), and performs intention perception, intention analysis, intention decision, and intention execution based on the AI network large model, scheme knowledge base, and AI agent. After determining a network construction scheme (i.e. the target network construction scheme), the SDN controller configures and sends the network construction scheme to the forward plane of the autonomous network, and collects information from the forwarding surface of the autonomous network. The forwarding surface of the autonomous network is a leaf ridge architecture, which includes multiple ridge nodes, leaf nodes, and servers. The network device is configured according to the target network construction scheme, forwarding paths between communication servers are open, and interaction between servers are completed through ridge nodes and leaf nodes.

The four stages of network planning and construction provided by the present disclosure are described in detail below in conjunction with the SDN controller interface shown in FIGS. 17a~FIGS. 17c, FIGS. 18a~FIGS. 18e, FIGS. 19a~FIGS. 19e, and FIGS. 20a~FIGS. 20b.

### 1) Intention Perception Stage

Figs. 17a to 17c are first schematic diagrams of the SDN controller interface provided in an example of the present disclosure. Figs. 17a~17c all show the SDN controller interfaces for the intention perception stage. As shown in FIGS. 17a~17c, the SDN controller interface mainly includes a stage bar 171, a model selection icon 176, a display bar 177, and an interaction icon 178. Among them, the stage bar 171 includes an intention perception stage tab 172, an intention analysis stage tab 173, an intention decision stage tab 174, and an intention execution stage tab 175, which correspond to the four stages of network planning and construction, respectively. The intention perception stage tab 172 is in bold, indicating that it is currently in the intention perception stage.

When the SDN controller interface shown in Fig. 17a is displayed, the user can click on the model selection icon 176, and the SDN controller, in response to the user's operation of clicking on the model selection icon 176, displays a plurality of models that can be selected by the user for performing intention analysis (i.e., recommending a network construction scheme), and the user clicks on the selection of a model, and the SDN controller, in response to the user's action of clicking on the selection of a model, can switch the model for performing the intention analysis. In Fig. 17a, the currently adopted model is the AI network large model.

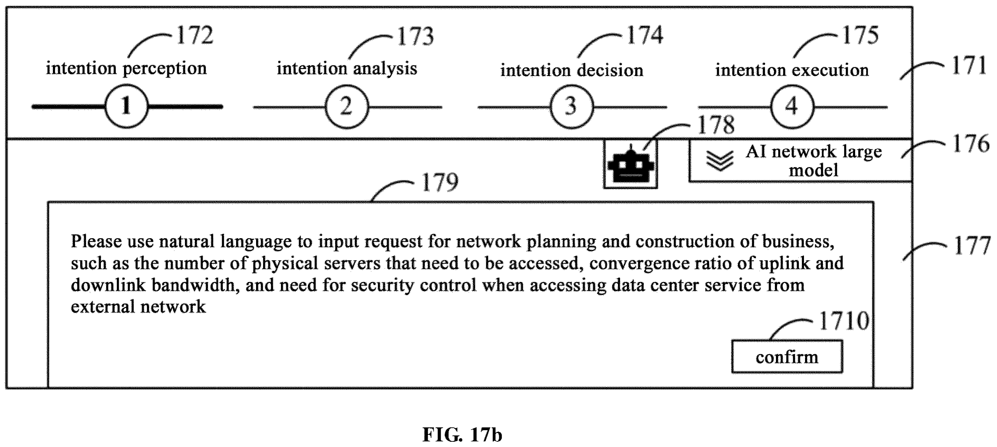

The user can click on the interaction icon 178 (i.e., dialog box icon) on the interface of the SDN controller, and the SDN controller, in response to the user's operation of clicking on the interaction icon 178, calls the front-end general API (i.e., the fourth interface) corresponding to the operation of the user's clicking on the interaction icon 178, and displays the human-computer natural language interaction interface (i.e., the human-computer interaction dialog box) in the display bar 177, that is, the human-computer natural language interaction interface shown in Fig. 17b. The human-computer natural language interaction interface 179 may include a confirmation button 1710.

The SDN controller may detect the to-be-executed operation in real time or event-triggered. Wherein, the event triggering the detection of the to-be-executed operation may be: an operation event of the user clicking on the interface, an event of the SDN controller or the AI network large model completes an execution operation (e.g., an intention analysis event), etc.

When the SDN controller detects that the current stage is an intention perception stage and determines that the user has not yet executed any operation, the SDN controller may determine that the to-be-executed operation is to collect a business intention of a network planning and construction scenario (i.e., a network planning and construction intention), and thus, the SDN controller displays prompt information associated with the to-be-executed operation (i.e., first prompt information) in the human-computer natural language interaction interface 179, the prompt information displayed in the human-computer natural language interaction interface 179 as shown in Fig. 17b.

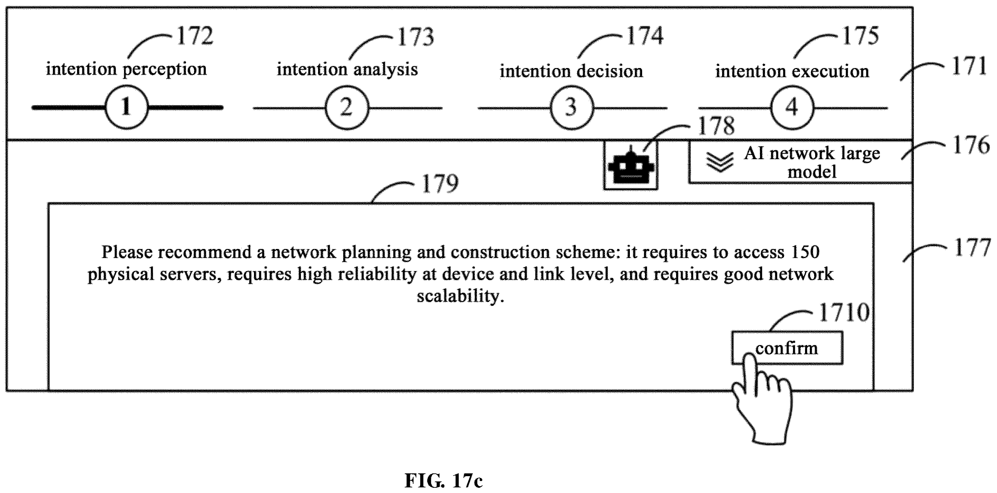

The user may enter a natural language expressing the business intention of the network planning and construction scenario (i.e., a first natural language) in the human-computer natural language interaction interface 179 in accordance with the prompt information in the human-computer natural language interaction interface 179, such as the natural language displayed in the human-computer natural language interaction interface 179 as shown in Fig. 17c. The user clicks the confirmation button 1710; the SDN controller, in response to the user's operation of clicking the confirmation button 1710, takes in the natural language in the human-computer natural language interaction interface 179 as the collected business intention of the network planning and construction scenario. The prompt information and business intention shown in FIGS. 17b and 17c are only examples and do not serve a limiting role herein.

In an example of the present disclosure, the interaction icon 178 and the human-computer natural language interaction interface 179 may be suspended on the display bar 177, i.e., the user may drag and drop the interaction icon 178 and the human-computer natural language interaction interface 179 on the interface of the SDN controller, and in response to the user's dragging and dropping operation, the SDN controller calls the front-end general API corresponding to the dragging and dropping operation to move the interaction icon 178 and the human-computer natural language interaction interface 179.

The user may click on the interaction icon 178 again or click on the blank position of the display bar 177, and the SDN controller, in response to the operation of the user clicking on the interaction icon 178 again or in response to the operation of the user clicking on the blank position of the display bar 177, calls the front-end general API corresponding to the click operation to close the human-computer natural language interaction interface 179.

The human-computer natural language interaction interface 179 on the SDN controller is not limited to the SDN controller interface in the intention perception phase, i.e., the human-computer natural language interaction interface 179 may also be displayed on the SDN controller interface in the intention analysis phase, the intention decision phase, and the intention execution phase.

By providing the human-computer natural language interaction interface on the SDN controller interface of the autonomous network in the data center and integrating the capability of the AI network large model through API calls, the SDN controller realizes the use of natural language to collect the business intention of the network planning and construction scenarios input by the user, and presets the prompt information for input of the business intention of the network planning and construction scenarios in the human-computer natural language interaction interface, which can guide users to efficiently input business intentions.

### 2) Intention analysis phase

In an example of the present disclosure, the intention analysis phase can be entered in several methods as follows.

Method 1: in the intention perception stage, after the user clicks the confirmation button 1710, the network planning and construction scheme jumps to the intention analysis stage.

Specifically, after the user inputs the business intention of the network planning and construction scenario in the human-computer natural language interaction interface 179 and clicks on the confirmation button 1710, the SDN controller, in response to the user's operation of clicking on the confirmation button 1710, calls a front-end general API for jumping to the corresponding interface, to jump to the SDN controller interface in the intention analysis stage, and enters the intention analysis stage. At this time, the business intention of the network planning and construction scenario is the natural language in the human-computer natural language interaction interface 179 when the user clicks the confirmation button 1710.

Method 2: the user may click the intention analysis stage tab 173, and the network planning and construction scheme jumps to the intention analysis stage.

Specifically, after the user enters the business intention of the network planning and construction scenario in the human-computer natural language interaction interface 179 and clicks the confirmation button 1710, the user may click the intention analysis stage tab 173, and the SDN controller, in response to the user's clicking operation, calls the front-end general API for jumping to the corresponding interface, to jump to the SDN controller interface of the intention analysis stage, and enters the intention analysis stage. At this time, the business intention of the network planning and construction scenario is the natural language in the human-computer natural language interaction interface 179 when the user clicks the confirmation button 1710.

After entering the intention analysis stage, the SDN controller calls the API corresponding to the AI network large model (i.e., the first interface), inputs the natural language displayed in the human-computer natural language interaction interface 179 into the AI network large model for intention analysis.

Figs. 18a to 18b are second schematic diagrams of the SDN controller interface provided in an example of the present disclosure. Figs 18a to 18b all show the SDN controller interfaces for the intention analysis stage, wherein the intention analysis stage tab 173 is in bold.

On the SDN controller interface in the intention analysis stage, a human-computer natural language interaction interface 179 may also be displayed. The manner in which the human-computer natural language interaction interface 179 is opened and closed may be described in relation to the intention perception stage.

On the SDN controller interface in the intention analysis stage, the SDN controller may display an analysis progress 181 on the display bar 177, as shown in Fig. 18a, where the current analysis progress is 80%. In Fig. 18a, the SDN controller closes the human-computer natural language interaction interface 179.

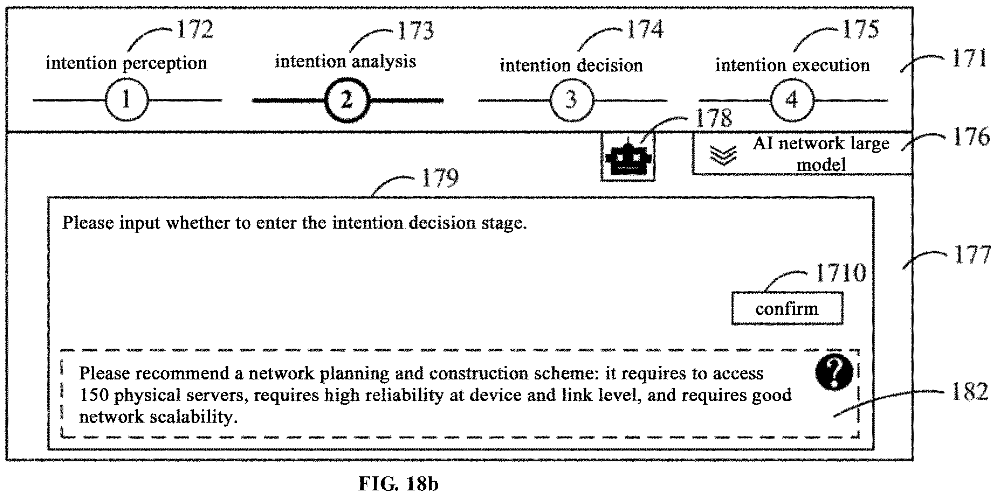

When the human-computer natural language interaction interface 179 is opened, historical question and answer information can be displayed on the human-computer natural language interaction interface 179, such as historical question information 182 (i.e., business intent) input into the AI network large model by the user as shown in Fig. 18b.

In an example of the present disclosure, the SDN controller may detect that the current stage is an intention analysis stage, and determine that the business intention of the network planning and construction scenario is collected. At this time, if the intention analysis has not been completed (i.e., the analysis progress has not reached 100%), the SDN controller may display prompt information of please wait on the human-machine natural language interaction interface 179. If the intention analysis has been completed (i.e., the analysis progress has reached 100%), i.e., the AI network large model has output a recommended network construction scheme, the SDN controller can determine the to-be-executed operation is to enter the intention decision stage. Accordingly, the SDN controller displays on the human-computer natural language interactive interface 179, prompt information guiding the user to enter the intention decision stage, such as the prompt information displayed in the human-computer natural language interactive interface 179 shown in Fig. 18b.

### 3) Intention decision stage

In an example of the present disclosure, after the intention analysis is completed, the intention decision stage can be entered in several methods as follows.

Method 1: in the intention analysis stage, after the user clicks the confirmation button 1710, the network planning and construction scheme jumps to the intention decision stage.

Specifically, the user may enter the natural language for entering the intention decision stage in the human-computer natural language interaction interface 179 and click the confirmation button 1710, and the SDN controller, in response to the user's operation of clicking the confirmation button 1710, calls the front-end general API for jumping to the corresponding interface, jumps to the SDN controller interface of the intention decision stage, and enters the intention decision stage.

Method 2: the user clicks on the intention decision stage tab 174, and the network planning and construction scheme jumps to the intention decision stage.

The user may click the intention decision stage tab 174, and the SDN controller, in response to the user's clicking operation, calls the front-end common API for jumping to the corresponding interface, jumps to the SDN controller interface of the intention decision stage, and enters the intention decision stage.

Figs. 19a to 19e are third schematic diagrams of the SDN controller interface provided in an example of the present disclosure. Figs 19a to 19e all show the SDN controller interfaces for the intention decision stage, wherein the intention decision stage tab 174 is in bold.

A human-computer natural language interaction interface 179 may also be displayed on the SDN controller interface in the intention decision stage. The manner in which the human-computer natural language interaction interface 179 is opened and closed may be described in relation to the intention perception stage.

In the case where the human-computer natural language interaction interface 179 is opened, the historical question and answer information displayed on the human-computer natural language interaction interface 179 may comprise: historical answer information 191 (i.e., a scheme description of a target network construction scheme recommended by the AI network large model) output by the AI network large model as shown in Figs. 19a.

In an example of the present disclosure, the business intention of the network planning and construction scenario input by the user to the AI network large model may or may not include a preference for the overall requirements of the network construction scheme; the content of the historical answer information 191 is determined based on whether the historical question information 182 has a preference requirement.

For example, in the case where the business intention of the network planning and construction scenario includes a preference for the overall requirements of the network construction scheme, take the preference of the overall requirements of the network construction scheme as high reliability and good scalability at the device and link levels as an example, the AI network large model, based on the business intention of the network planning and construction scenario that requires high reliability and good scalability at the device and link levels, may generate a network construction scheme, the network construction scheme is a network construction scheme with high reliability and good scalability at the device and link level, and the scheme description of this network construction scheme is shown in the historical answer information output by the AI network large model, such as the scheme description in the historical answer information 191 shown in Fig. 19a, i.e., the networking architecture (i.e., the network architecture information) is: a three-layer network architecture with boundary leaf nodes, ridge nodes, and leaf nodes is adopted; the number of devices ( i.e., network device information) is: boundary leaf node - 2 box switches, ridge node - 2 frame switches, and leaf node - 10 box switches; and the networking form (i.e., the link information) is: M-LAG group consisted of 2 leaf nodes, and the server dual-access to the M-LAG; port information is: ports 1 and 2 of the switch are interconnected with other switches, and ports 3 and 4 are used as the Intra-Portal Link (IPL) and Peer-link of the M-LAG; the resource pool is: the IP resource pool for device management: 172.168.1.0/24; VTEP IP resource pool: 172.168.2.0/24.

As another example, in the case where the business intention of the network planning and construction scenario does not include a preference for the overall requirements of the network construction scheme, the AI network large model can generate multiple network construction schemes based on the business intention of the network planning and construction scenario. At this time, the historical answer information output by the AI network large model may include scheme descriptions of these multiple network construction schemes.

In an example of the present disclosure, the SDN controller may detect that the current stage is an intention decision stage, and determine that the AI network large model has output a recommended network construction scheme, which may in turn determine that the to-be-executed operation is to display the network construction scheme. Accordingly, the SDN controller displays prompt information (i.e., second prompt information) associated with the to-be-executed operation on the human-computer natural language interaction interface 179, such as the prompt information displayed in the human-computer natural language interaction interface 179 shown in Fig. 19a.

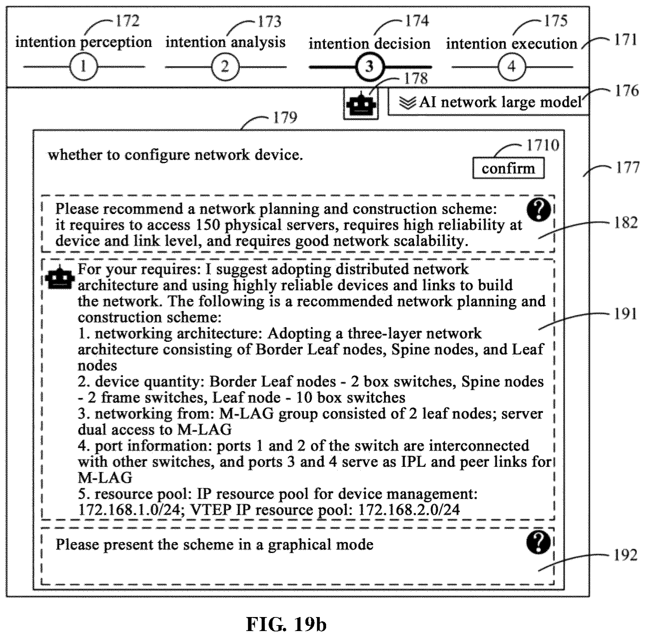

The user may, according to the prompt information in the human-computer natural language interactive interface 179, input the natural language (i.e., the second natural language) that expresses the display manner in the human-computer natural language interactive interface 179 and click on the confirmation button 1710. An example is illustrated by taking the case in which the user inputs the natural language for performing graphical presentation in the human-computer natural language interactive interface 179. After the user inputs the natural language for performing graphical presentation, corresponding history information may be added to the history question and answer information of the human-computer natural language interaction interface 179, such as the history question information 192 in Fig. 19b.

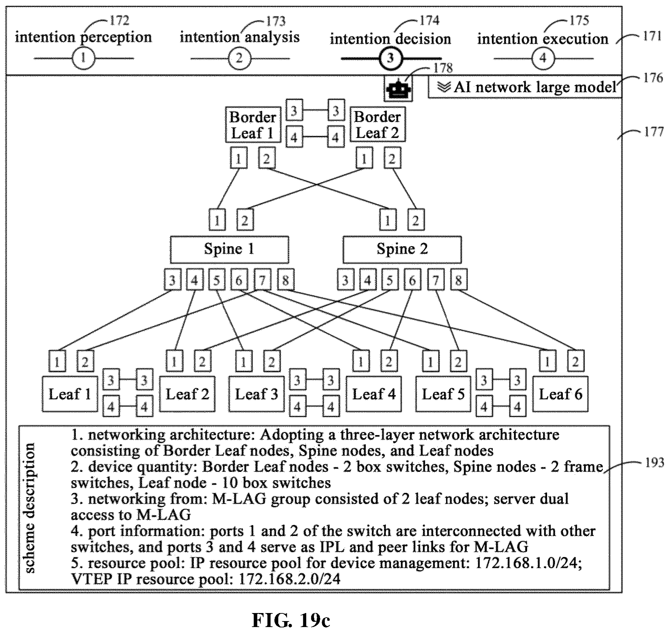

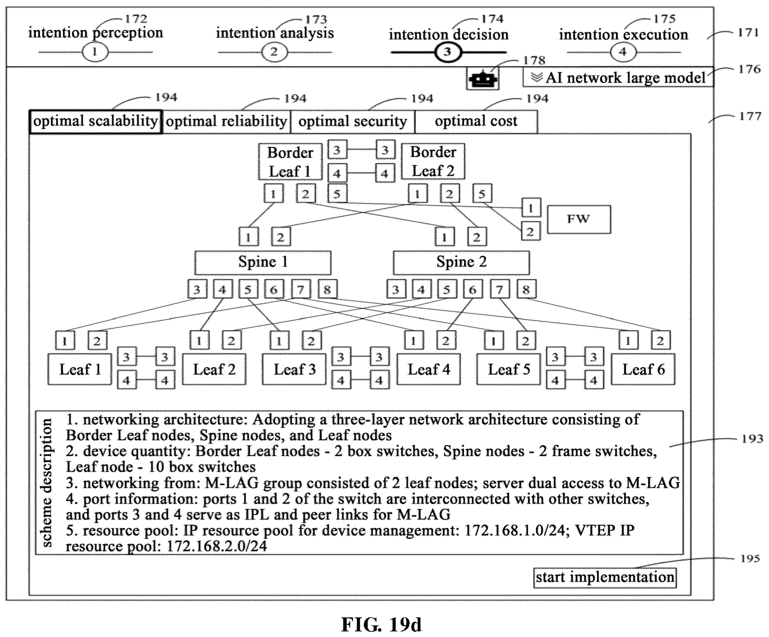

In addition, the user inputs the natural language expressing the graphical presentation mode in the human-computer natural language interactive interface 179 and clicks the confirmation button 1710, and the SDN controller, in response to the user's operation of clicking the confirmation button 1710, calls the corresponding API (i.e., the first interface) of the AI network large model, inputs the natural language input by the user into the AI network large model, and causes the AI network large model to output the corresponding presentation mode; and further, the SDN controller employs the AI Agent to call the SDN controller API (i.e., the second interface/visualization scheme API) corresponding to the presentation mode to graphically display the network construction scheme, as shown in FIGS. 19c and 19d.

Fig. 19c shows an illustration of an interface for the intention analysis stage when the business intention of the network planning and construction scenario includes a preference for the overall requirements of the network construction scheme, and Fig. 19d shows an illustration of an interface for the intention analysis stage when the business intention of the network planning and construction scenario does not include a preference for the overall requirements of the network construction scheme. In FIGS. 19c and 19d, the SDN controller closes the human-computer natural language interaction interface 179. In addition, the display bar 177 may include a scheme description 193 for displaying the network construction scheme in textual form.

The difference between Fig. 19c and Fig. 19d is that when the business intention of the network planning and construction scenario does not include a preference for the overall requirements of the network construction scheme, the display bar 177 also includes tabs 194 corresponding to multiple network construction schemes, with different tabs corresponding to different network construction schemes. As shown in Fig. 19d, the display bar 177 includes tabs 194 corresponding to the four network construction schemes corresponding to optimal scalability, optimal reliability, optimal security, and optimal cost, and under different tabs, the display bar 177 graphically displays different network construction schemes. Currently, the display bar 177 is located under the tab 194 corresponding to the network construction scheme with optimal scalability, and the SDN controller graphically displays the network construction scheme with optimal scalability. Fig. 19c and Fig. 19d include two illustrations of the graphically displayed network construction schemes, wherein the graphically presented network construction scheme in Fig. 19d also includes a firewall (FW) module and a corresponding port.

In Fig. 19d, the user may click on the tabs 194 corresponding to different network construction schemes, and the SDN controller, in response to the user's operation of clicking on the corresponding tabs 194, calls the corresponding front-end general API to present the corresponding network construction scheme to the user in the display bar 177, so as to facilitate the user to view the network construction scheme on his or her own.

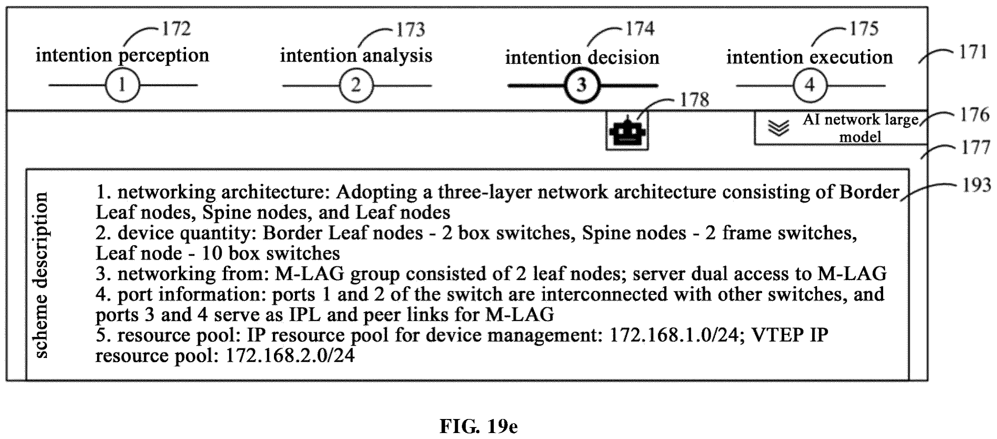

In the example of the present disclosure, in the case where the user does not input a presentation mode, the SDN controller may display the network construction scheme in a preset presentation mode, for example, presenting the network construction scheme in text form, such as the scheme description 193 of the network construction scheme presented in text form in the display bar 177 in Fig. 19e.

In addition, the user may perform operations such as dragging and dropping, editing, and the like on the graphically displayed network construction scheme in the display bar 177, and the SDN controller can fine-tune the network construction scheme in response to the user's operation of dragging and dropping, editing, and the like.

After displaying the network construction scheme, the SDN controller may determine that the to-be-executed operation is to determine a network construction scheme, and then display prompt information (i.e., third prompt information) for guiding the input for determining the network construction scheme on the human-computer natural language interaction interface 179.

The user may enter a natural language (i.e., the third natural language) in the human-computer natural language interactive interface 179 indicating the determination for the network construction scheme based on the prompt information (i.e., the third prompt information) displayed on the human-computer natural language interactive interface 179 for guiding the input for determining the network construction scheme, and click the confirmation button 1710. In response to the user's click on the confirmation button 1710, the SDN controller calls the API corresponding to the AI network large model (i.e., the first interface) to input the natural language input by the user into the AI network large model, causing the AI network large model to output the determined network construction scheme. Employing an AI Agent, the SDN controller may call the corresponding API to display the determined network construction scheme in the display bar 177.

If the displayed network construction scheme does not meet the expectation, the user can also continue to input the third natural language until the displayed network construction scheme meets the expectation. This operation has the same effect as that described above in which the user clicks on the tab 194 corresponding to different network construction schemes and switches the display of different network construction schemes.

After determining a network construction scheme, the SDN controller may determine that the to-be-executed operation is to configure a network device, then prompt information (i.e., the fourth prompt information) guiding the execution of the configuration of the network device may be displayed on the human-computer natural language interactive interface 179, such as the prompt information in the human-computer natural language interactive interface 179 shown in Fig. 19b.

In an example of the present disclosure, the AI network large model outputs one network construction scheme in the case where the business intention of the network planning and construction scenario includes a preference for the overall requirements of the network construction scheme. At this time, the SDN controller may omit the process of displaying the third prompt information and directly display the fourth prompt information.

In an example of the present disclosure, the default processing flow of the SDN controller in the intention decision stage is: first displaying network construction schemes output from the AI network large model, then determining a network construction scheme for configuring the network device, and then configuring the network device. The SDN controller may also change the processing flow based on the user's inputs, for example, when prompt information (i.e., second prompt information) for guiding presentation modes is displayed on the human-computer natural language interactive interface 179, the user may enter a natural language (i.e., a third natural language) for determining a network construction scheme and determining the network construction scheme; thereafter, when prompt information (i.e., fourth prompt information) for guiding the input of executing the configuration for the network device is displayed on the human-computer natural language interactive interface 179, the user may enter a presentation mode (i.e., the second natural language) for displaying the network construction scheme, which is not limited here.

In actual execution, the default processing flow of the SDN controller in the intention decision stage can be set according to actual requirements.

### 4) Intention execution stage

In an example of the present disclosure, the intention execution stage can be entered in several methods as follows.

Method 1: the user clicks the start implementation button 195, and the network planning and construction scheme jumps to the intention execution stage.

For example, in Fig. 19d, the SDN controller interface may include a start implementation button 195, and the user may click the start implementation button 195, and the SDN controller, in response to the user's operation of clicking the start implementation button 195, calls a front-end general API for jumping to a corresponding interface, jumps to the SDN controller interface in the intention execution stage, and enters the intention execution stage to configure the network device in accordance with the determined network construction scheme. In addition, in FIGS. 19c and 19e, the SDN controller interface may also include a start implementation button 195 (not shown in the figures).

In an example of the present disclosure, the SDN controller may take the operation of the user clicking the start implementation button 195 as an instruction to execute the network device configuration, and after jumping to the SDN controller interface in the intention decision stage, the SDN controller may directly configure the network device in accordance with the determined network construction scheme; or it may additionally input the instruction to execute the network device scheme, and after obtaining the instruction to execute the network device configuration, the SDN controller then configures the network device in accordance with the determined network construction scheme.

Method 2: after the user enters the fourth natural language in the human-computer natural language interaction interface 179 and clicks the confirmation button 1710, the network planning and construction scheme jumps to the intention execution stage.

Specifically, the user may enter a natural language (i.e., the fourth natural language) indicating the configuration of a network device in the human-computer natural language interactive interface 179 and click the confirmation button 1710. In response to the user's operation of clicking the confirmation button 1710, the SDN controller calls a corresponding API (i.e., the first interface) of the AI network large model to input the natural language entered by the user into the AI network large model, so that the AI network large model outputs the corresponding network device configuration instruction, and thus, the SDN controller employs the AI Agent to call the front-end general API for jumping to the corresponding interface, to jump to the SDN controller interface in the intention execution stage, enters the intention execution stage, calls the API (i.e., the third interface) corresponding to the network device configuration instruction, and configures the network device in accordance with the determined network construction scheme.

Method 3: the user clicks on the intention execution stage tab 175, and the network planning and construction scheme jumps to the intention execution stage.

Specifically, in the intention decision stage, when the user does not enter the fourth natural language, the user may click on the intention execution stage tab 175, and the SDN controller, in response to the user's operation of clicking on the intention execution stage tab 175, calls a front-end general API for jumping to a corresponding interface, to jump to the SDN controller interface in the intention execution stage, and enters the intention execution stage to configure the network device in accordance with the determined network construction scheme.

In an example of the present disclosure, the SDN controller may take the operation of the user clicking on the intention execution stage tab 175 as an instruction to execute the network device configuration, and after jumping to the SDN controller interface of the intention execution stage, the SDN controller may directly configure the network device in accordance with the determined network construction scheme; or it may additionally input the instruction for executing the configuration of the network device, and after obtaining the instruction for executing the configuration of the network device, the SDN controller then configures the network device in accordance with the determined network construction scheme.

For example, after jumping to the SDN controller interface of the intention execution stage, Method 2 is to enter a fourth natural language in the human-machine natural language interaction interface 179 for the purpose of obtaining the instruction for configuring the network device.

As another example, a start implementation button may be provided on the SDN controller interface of the intention execution stage, such as the start implementation button 201 in the display bar 177 shown in Fig. 20a. After jumping to the SDN controller interface of the intention execution stage, the user clicks on the start implementation button 201; in response to the user's operation of clicking on the start implementation button 201, the SDN controller generates the network device configuration instruction, calls the API corresponding to the network device configuration instruction (i.e., the third interface) to configure the network device in accordance with the determined network construction scheme.

In an example of the present disclosure, the determined network construction scheme is the network construction scheme displayed on the display bar 177 when the user clicks on the start implementation button 201 or clicks on the confirmation button 1710 or clicks on the intention execution stage tab 175, which may be determined by the user by clicking on the tabs 194 corresponding to the different network construction schemes in Fig. 19d, or determined by the user by entering a natural language (i.e., a third natural language) indicating the determination of a network construction scheme in the human-computer natural language interaction interface 179.

Figs. 20a to 20b are fourth schematic diagrams of the SDN controller interface provided in an example of the present disclosure. Figs. 20a to 20b all show the SDN controller interfaces for the intention execution stage, wherein the intention execution stage tab 175 is in bold.

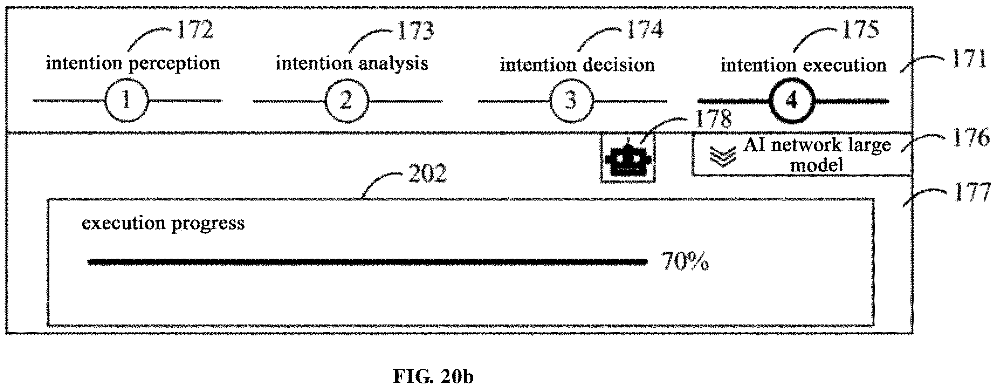

During the process of intention execution (i.e., configuring the network device), the SDN controller may display the execution progress 202 on the display bar 177, as shown in Fig. 20b, where the current execution progress is 70% and has not reached 100%, indicating that the intention execution is not yet completed. At this time, the SDN controller may display prompt information of please wait on the human-machine natural language interaction interface 179. When the intention execution is completed (i.e., the execution progress reaches 100%), the SDN controller confirms that the network device configuration is completed.

In the technical solution provided by the examples of the present disclosure, the AI network large model is introduced, and the ability of human-computer natural language interaction based on the AI network large model is intended to solve the problem of the autonomous network in the data center lacking the ability to understand the user's business-level intention when collecting the intention of network planning and construction.

AI network large model is trained through a large number of DCN corpus, and the model is fine-tuned in combination with annotated datasets (i.e., sample natural language and corresponding sample network planning and construction schemes) in network planning and construction scenarios, and AI network large model is deployed in production environments to improve the ability to understand the intention of network planning and construction, and to solve the problem that the autonomous network in the data centers cannot understand the new network intentions and changing network intentions in the network planning and construction scenarios.

By means of AI network large model plus scheme knowledge base, private domain knowledge for configuring the network device in the network planning and construction scenarios of the AI network large model are extended, thereby improving the accuracy of the AI network large model in recommending and generating schemes for autonomous network planning and construction scenarios.

Through the AI Agent framework, rich APIs of SDN controller can be called based on the toolset, so as to realize the graphical presentation capability of network construction schemes.

By continuously enriching the network corpus and annotated datasets of network planning and construction scenarios of the autonomous network in the data center, the training and fine-tuning of the AI network large model are realized, and by continuously updating the deployment method of the AI network large model in the background, the self-development and evolution of the ability of recommending and generating network construction schemes in network planning and construction scenarios of the autonomous network in the data center are realized; by splitting and embedding new knowledge and storing it in a vector database, the scheme knowledge base is continuously supplemented and improved; by continuously enriching the toolset for interaction between network planning and construction scenarios and SDN controller through the AI Agent framework, the intention execution capability of network planning and construction scenarios is improved, and finally realizing the self-development and evolution of the ability in recommending and generating a network scheme of network planning and construction scenarios.

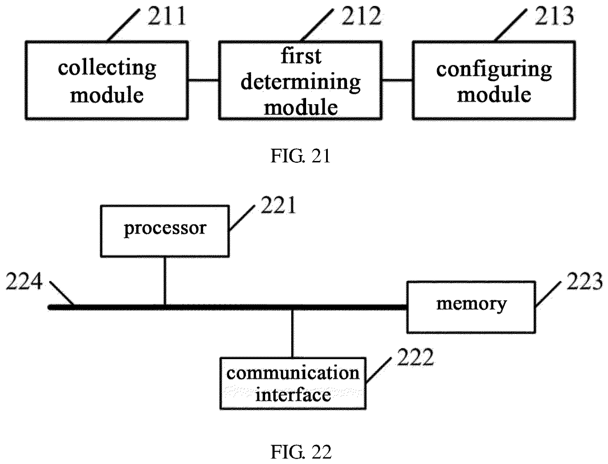

Corresponding to the above-described network planning and construction method, the examples of the present disclosure provide an apparatus of network planning and construction. As shown in Fig. 21, Fig. 21 is a schematic structural diagram of the apparatus of network planning and construction provided by the examples of the present disclosure. The above-described apparatus comprises:
a collecting module 211 to collect a first natural language indicating an intention of the network planning and construction based on a human-computer interaction mode;
a first determining module 212 to input the first natural language into an artificial intelligence AI network large model to obtain a target network construction scheme, wherein the target network construction scheme comprises network topology information and network configuration information;
a configuring module 213 to configure, after detecting that a network device corresponding to the network topology information is powered on, the network device according to the network configuration information.

In the technical solution provided in the examples of the present disclosure, the natural language is to express the intention of the user, namely the intention of network planning and construction. The natural language is a language that is easy for the user to understand and does not require a professional knowledge background. Therefore, using the natural language to express the intention of the user to achieve the network planning and construction, which increasing the ability to understand the user's business level intention. In addition, in the technical solution provided in the examples of the present disclosure, the AI network large model is to analyze and process the natural language (i.e. the first natural language) that expresses the intention of the user, to obtain the target network construction scheme that meets the intention of the network planning and construction. Due to the strong natural language processing ability of the AI network large model, even there are new and changing intentions, the AI network large model can analyze and obtain the desired target network construction scheme, thereby improving the scalability of intention collection, and enhancing the adaptation ability to scenarios and networking.

In some examples, the collecting module 211 is specifically to:
present a human-computer interaction dialog box;
receive the first natural language indicating the intention of the network planning and construction input by a user in the human-computer interaction dialog box.

In some examples, the collecting module 211 is further to:
display first prompt information in the human-computer interaction dialog box, which is to guide the input of the intention of the network planning and construction.

In some examples, the first determining module 212 is specifically to:
match the first natural language with pieces of knowledge of multiple pre-stored network construction schemes, to obtain multiple pieces of candidate knowledge;
input the first natural language and the multiple pieces of candidate knowledge into the AI network large model to obtain the target network construction scheme.

In some examples, the apparatus further includes a displaying module to:
collect a second natural language indicating a presentation mode of the network planning and construction based on the human-computer interaction mode;
input the second natural language into the AI network large model to obtain a target presentation mode;
call an interface corresponding to the target presentation mode by using an AI agent, to present the target network construction scheme.

In some examples, the displaying module is specifically to:
present a human-computer interaction dialog box;
receive the second natural language indicating the presentation mode of the network planning and construction input by a user in the human-computer interaction dialog box.

In some examples, the displaying module is further to:
display second prompt information in the human-computer interaction dialog box, wherein the second prompt information is to guide the input of the presentation mode of the network planning and construction.

In some examples, the apparatus further includes an adjusting module to:
adjust the presented target network construction scheme based on an operation of the user.

In some examples, the AI network large model outputs multiple target network construction schemes;

The apparatus further includes a second determining module to:
determine one target network construction scheme from the multiple target network construction schemes;
the configuring module 213 is specifically to:
   configure, after detecting that a network device corresponding to the network topology information comprised in the determined target network construction scheme is powered on, the network device according to the network configuration information comprised in the determined target network construction scheme.

In some examples, the second determining module is specifically to:
collect a third natural language indicating the determined target network construction scheme based on the human-computer interaction mode;
input the third natural language into the AI network large model to obtain the determined target network construction scheme.

In some examples, the second determining module is specifically to:
present a human-computer interaction dialog box;
receive the third natural language indicating the determined target network construction scheme input by a user in the human-computer interaction dialog box.

In some examples, the second determining module is further to:
display third prompt information in the human-computer interaction dialog box, wherein the third prompt information is to guide the input of the determined target network construction scheme.

In some examples, the configuring module 213 is specifically to:
collect a fourth natural language indicating configuration of the network device based on the human-computer interaction mode;
input the fourth natural language into the AI network large model to obtain a network device configuration instruction;
call an interface corresponding to the network device configuration instruction by using an AI agent, to configure the network device according to the network configuration information.

In some examples, the configuring module 213 is specifically to:
present a human-computer interaction dialog box;
receive the fourth natural language indicating the configuration of the network device input by a user in the human-computer interaction dialog box.

In some examples, the configuring module 213 is further to:
display fourth prompt information in the human-computer interaction dialog box, wherein the fourth prompt information is to guide the input of execution information for the configuration of the network device.

In some examples, the apparatus further includes a displaying module to:
determine a to-be-executed operation;
display prompt information associated with the to-be-executed operation, in the human-computer interaction dialog box.

In some examples, the apparatus further includes a fine-tuning module to:
obtain a sample natural language and a sample network planning and construction scheme corresponding to the sample natural language;
fine-tune the AI network large model by using the sample natural language and the sample network planning and construction scheme.

The examples of the present disclosure provide an electronic device, as shown in Fig. 22, which comprises a processor 221, a communication interface 222, a memory 223 and a communication bus 224, wherein the processor 221, the communication interface 222 and the memory 223 communicate with each other via the communication bus 224;
the memory 223 is to storing a computer program;
the processor 221 is to implement any one of the methods for network planning and construction when executing the program stored on the memory 223.

The communication bus aforementioned in the electronic device may be a peripheral component interconnect (PCI) bus or an extended industry standard architecture (EISA) bus and the like. The communication bus can include an address bus, a data bus, a control bus, or the like. For representation, only one thick line is shown in the figures, which does not mean there is only one bus or one type of bus.
the communication interface 222 is used for communication between the aforementioned electronic device and other devices.

The memory 223 can include a random access memory (RAM), or can include a non-volatile memory (NVM), for example at least one disk memory. In an example, the memory 223 can also be at least one storage device located away from the processor 221 described above.

The processor 221 can be a general-purpose processor, such as a central processing unit (CPU), a network processor (NP), or the like; it can also be a digital signal processor (DSP), an application specific integrated circuit (ASIC), a field-programmable gate array (FPGA) or other programmable logic device, a discrete gate or transistor logic device, a discrete hardware component.

An example of the present disclosure provides a computer readable storage medium. The computer readable storage medium stores computer program thereon which, when executed by a processor, cause the processor to implement any one of the aforementioned methods for network planning and construction.

In still another example according to the present disclosure, there is also provided a computer program product with instructions that, when running on a computer, cause the computer to execute any one of the methods for network planning and construction in the aforementioned examples.

In the aforementioned examples, it may be implemented in whole or in part by software, hardware, firmware, or any combination thereof. When implemented by software, it may be implemented in whole or in part in the form of a computer program product. The computer program product includes one or more computer instructions. The processes or functions described in accordance with the examples of the present disclosure is produced in whole or in part, when the computer program instructions are loaded and executed on a computer. The computer may be a general-purpose computer, a dedicated computer, a computer network, or other programmable device. The computer instructions may be stored in a computer-readable storage medium or may be transmitted from one computer-readable storage medium to another computer-readable storage medium, for example, the computer instructions may be transmitted from a web site, a computer, a server, or a data center to another web site, another computer, another server, or another data center via a cable (such as a coaxial cable, an optical fiber, a digital subscriber line (DSL)) or wireless (such as infrared, wireless, microwave, etc.). The computer-readable storage medium may be any available medium that may be accessed by a computer or a data storage device such as a server or a data center that integrates one or more available media. The available media may be magnetic media (such as floppy disks, hard disks, magnetic tapes), optical media (such as DVD), or semiconductor media (such as solid state disk (SSD)), etc.

It should be noted that, the relationship terms herein such as "first", "second" and the like are only to distinguish one entity or operation from another entity or operation, but do not necessarily require or imply that there is actual relationship or order between these entities or operations. Moreover, the terms "include", "comprise" or any other variants thereof are intended to cover non-exclusive inclusions, so that processes, methods, articles or devices including a series of elements include not only those elements listed but also those not specifically listed or the elements intrinsic to these processes, methods, articles, or devices. Without further limitations, elements defined by the sentences "comprise(s) a." or "include(s) a." do not exclude that there are other identical elements in the processes, methods, articles, or devices which include these elements.

All the examples are described in corresponding ways, same or similar parts in each of the examples can be referred to one another, and the parts emphasized are differences to other examples. For examples of the apparatus, electronic device, storage medium and computer program product, since they are similar to the examples of the method, the description thereof is relatively simple; the relating parts could refer to the parts of the description of examples of the method.

The description is only for preferred examples of the present disclosure, and examples are not so limited. Any modifications, substitutions, improvements, etc., which are made within the spirit and principles of the present disclosure, will fall into the protection scope of the present disclosure.

## Claims

1. A method for network planning and construction, wherein the method comprises:
collecting a first natural language indicating an intention of the network planning and construction based on a human-computer interaction mode;
inputting the first natural language into an artificial intelligence AI network large model to obtain a target network construction scheme, wherein the target network construction scheme comprises network topology information and network configuration information;
configuring, after detecting that a network device corresponding to the network topology information is powered on, the network device according to the network configuration information.

2. The method according to claim 1, wherein collecting the first natural language indicating the intention of the network planning and construction based on the human-computer interaction mode comprises:
presenting a human-computer interaction dialog box;
receiving the first natural language indicating the intention of the network planning and construction input by a user in the human-computer interaction dialog box.

3. The method according to claim 2, wherein the method further comprises:
displaying first prompt information in the human-computer interaction dialog box, wherein the first prompt information is to guide the input of the intention of the network planning and construction.

4. The method according to claim 1, wherein inputting the first natural language into the artificial intelligence AI network large model to obtain the target network construction scheme comprises:
matching the first natural language with pieces of knowledge of multiple pre-stored network construction schemes, to obtain multiple pieces of candidate knowledge;
inputting the first natural language and the multiple pieces of candidate knowledge into the AI network large model to obtain the target network construction scheme.

5. The method according to claim 1, wherein the method further comprises:
collecting a second natural language indicating a presentation mode of the network planning and construction based on the human-computer interaction mode;
inputting the second natural language into the AI network large model to obtain a target presentation mode;
calling an interface corresponding to the target presentation mode by using an AI agent, to present the target network construction scheme.

6. The method according to claim 5, wherein collecting the second natural language indicating the presentation mode of the network planning and construction based on the human-computer interaction mode comprises:
presenting a human-computer interaction dialog box;
receiving the second natural language indicating the presentation mode of the network planning and construction input by a user in the human-computer interaction dialog box.

7. The method according to claim 6, wherein the method further comprises:
displaying second prompt information in the human-computer interaction dialog box, wherein the second prompt information is to guide the input of the presentation mode of the network planning and construction.

8. The method according to any one of claims 5-7, wherein the method further comprises:
adjusting the presented target network construction scheme based on an operation of the user.

9. The method according to claim 1, wherein the AI network large model outputs multiple target network construction schemes;
the method further comprises:
determining one target network construction scheme from the multiple target network construction schemes;
wherein configuring, after detecting that the network device corresponding to the network topology information is powered on, the network device according to the network configuration information comprises:
configuring, after detecting that a network device corresponding to the network topology information comprised in the determined target network construction scheme is powered on, the network device according to the network configuration information comprised in the determined target network construction scheme.

10. The method according to claim 9, wherein determining one target network construction scheme from the multiple target network construction schemes comprises:
collecting a third natural language indicating the determined target network construction scheme based on the human-computer interaction mode;
inputting the third natural language into the AI network large model to obtain the determined target network construction scheme.

11. The method according to claim 10, wherein collecting the third natural language indicating the determined target network construction scheme based on the human-computer interaction mode comprises:
presenting a human-computer interaction dialog box;
receiving the third natural language indicating the determined target network construction scheme input by a user in the human-computer interaction dialog box.

12. The method according to claim 11, wherein the method further comprises:
displaying third prompt information in the human-computer interaction dialog box, wherein the third prompt information is to guide the input of the determined target network construction scheme.

13. The method of claim 1, wherein configuring the network device according to the network configuration information comprises:
collecting a fourth natural language indicating configuration of the network device based on the human-computer interaction mode;
inputting the fourth natural language into the AI network large model to obtain a network device configuration instruction;
calling an interface corresponding to the network device configuration instruction by using an AI agent, to configure the network device according to the network configuration information.

14. The method according to claim 13, wherein collecting the fourth natural language indicating the configuration of the network device based on the human-computer interaction mode comprises:
presenting a human-computer interaction dialog box;
receiving the fourth natural language indicating the configuration of the network device input by a user in the human-computer interaction dialog box.

15. The method according to claim 14, wherein the method further comprises:
displaying fourth prompt information in the human-computer interaction dialog box, wherein the fourth prompt information is to guide the input of execution information for the configuration of the network device.

16. The method according to any one of claims 3, 7, 12 and 15, wherein the method further comprises:
determining a to-be-executed operation;
displaying prompt information associated with the to-be-executed operation, in the human-computer interaction dialog box.

17. The method according to claim 1, wherein the method further comprises:
obtaining a sample natural language and a sample network planning and construction scheme corresponding to the sample natural language;
fine-tuning the AI network large model by using the sample natural language and the sample network planning and construction scheme.

18. An apparatus for network planning and construction, wherein the apparatus comprises:
a collecting module to collect a first natural language indicating an intention of the network planning and construction based on a human-computer interaction mode;
a first determining module to input the first natural language into an artificial intelligence AI network large model to obtain a target network construction scheme, wherein the target network construction scheme comprises network topology information and network configuration information;
a configuring module to configure, after detecting that a network device corresponding to the network topology information is powered on, the network device according to the network configuration information.

19. An electronic device comprising a processor, a communication interface, a memory and a communication bus, wherein the processor, the communication interface and the memory communicate with each other via the communication bus;
the memory is to store a computer program;
the processor is to implement the method of any one of claims 1-17 when executing the program stored on the memory.

20. A computer readable storage medium, wherein the computer readable storage medium stores instructions thereon which, when executed by a processor, cause the processor to implement the method of any one of claims 1-17.
